# EUROPÄISCHE PATENTSCHRIFT

(11) **EP 3 044 135 B1**
(45) Veröffentlichungstag und Bekanntmachung des Hinweises auf die Patenterteilung: **06.02.2019**
(21) Anmeldenummer: 14752822.8
(22) Anmeldetag: 13.08.2014
(51) Int. Cl.: B65G 45/02, B65G 45/18, B65G 54/02

(54) **VORRICHTUNG UND VERFAHREN ZUM DURCHFÜHREN VON SONDERFUNKTIONEN EINER TRANSPORTEINRICHTUNG IN EINER BEHÄLTERBEHANDLUNGSANLAGE**
DEVICE AND METHOD FOR PERFORMING SPECIAL FUNCTIONS OF A TRANSPORT APPARATUS IN A CONTAINER-PROCESSING INSTALLATION
DISPOSITIF ET PROCÉDÉ POUR EXÉCUTER DES FONCTIONS SPÉCIALES D'UN DISPOSITIF DE TRANSPORT DANS UN SYSTÈME DE TRAITEMENT DE CONTENANTS

(30) Priorität: 13.09.2013 DE 102013218402
(43) Veröffentlichungstag der Anmeldung: 20.07.2016
(60) Teilanmeldung: 18212662.3
(73) Patentinhaber: KRONES AG, 93073 Neutraubling (DE)
(72) Erfinder: SENN, Konrad, 93073 Neutraubling (DE)
(74) Vertreter: Grünecker Patent- und Rechtsanwälte PartG mbB
(86) Internationale Anmeldenummer: PCT/EP2014/067294
(87) Internationale Veröffentlichungsnummer: WO 2015/036193

(56) Entgegenhaltungen:
- EP-A1- 0 589 844
- EP-A1- 1 182 153
- EP-A1- 3 003 926
- WO-A1-2006/021778
- JP-A- S5 925 572
- JP-A- S6 192 950
- JP-A- H05 213 446
- US-A- 5 547 285

## Beschreibung

### Gebiet der Erfindung

Die vorliegende Erfindung betrifft eine Vorrichtung und ein Verfahren zum Durchführen von Sonderfunktionen einer Transporteinrichtung mit einzelnen steuerbaren Transportelementen zum Transport von Behältern, insbesondere von Flaschen oder Dosen, in einer Anlage zur Behandlung der Behälter.

### Stand der Technik

Bei Behälterbehandlungsanlagen werden Behälter, wie z.B. Flaschen, Dosen, usw., in einem oder mehreren aufeinanderfolgenden Prozessschritten behandelt. Dabei werden im Allgemeinen die Prozessschritte bzw. Arbeitsschritte in separaten Behandlungseinheiten durchgeführt, die beispielsweise als Module eines gemeinsamen Anlagenkonzepts zusammengestellt werden können. Um Kosten für die Anschaffung und den Betrieb der Anlage zu reduzieren, werden üblicherweise Schnittstellen zur Steuerung der Anlage, zur Medienversorgung oder dergleichen vereinheitlicht, um die Kombination von Behandlungseinheiten unterschiedlicher Typen und/oder Produktionskapazitäten zu vereinfachen. Eine Behälterbehandlungsanlage für Kunststoffflaschen, z.B. aus Polyethylenterephthalat (PET), Polypropylen (PEP), usw., kann beispielsweise eine Heizvorrichtung zum Erwärmen der Vorformlinge, eine Streckblasvorrichtung zum Expandieren und Strecken der Vorformlinge zu Kunststoffflaschen, eine Reinigungsvorrichtung, eine Etikettiervorrichtung, eine Füllvorrichtung, eine Sortiervorrichtung, eine Verpackungsvorrichtung, eine Sterilisationsvorrichtung, eine Inspektionsvorrichtung, eine Temperiervorrichtung, eine Kühlvorrichtung, eine Beschichtungsvorrichtung, eine Puffervorrichtung, usw. als separate, modular ausgeführte Behandlungseinheiten umfassen. Die einzelnen Behandlungseinheiten, welche aufeinanderfolgende Prozessschritte durchführen, sind dabei im Stand der Technik im Allgemeinen in Reihe hintereinander geschaltet, wobei eine oder mehrere Transporteinrichtungen den Transport der Behälter von den Behandlungseinheiten zu den jeweiligen nachgeschalteten Behandlungseinheiten übernehmen.

Die Durchführung aufeinanderfolgender Prozessschritte durch die separaten Behandlungseinheiten der Anlage sowie der Transport zwischen den Behandlungseinheiten entspricht somit dem bekannten Prinzip der Fließbandverarbeitung, bei der ein kontinuierlicher Fluss von zu behandelnden Behältern durch die in Serie angeordneten Behandlungseinheiten mittels geeigneter Steuerungsprozesse bezüglich der Prozessdauer der einzelnen Prozessschritte und/oder der Menge der pro Zeiteinheit von einer Behandlungseinheit zur nächsten Behandlungseinheit transportierten Behälter erreicht wird. Bei den im Stand der Technik bekannten Anlagen wird der Transport der Behälter zwischen den Behandlungseinheiten vielfach mittels einer Vielzahl separater Transportelemente in Form von Trägern realisiert, welche die Behälter oder Vorformlinge mittels geeigneter Haltevorrichtungen, zum Bespiel speziell geformter Greifelemente, bei einer Aufnahmestelle aufnehmen, durch die Reihe der aufeinanderfolgenden Behandlungseinheiten transportieren und schließlich an einer Abgabestelle abgeben. Die Behälter werden dabei im Allgemeinen durch geeignet ausgestaltete Zuförderer an den Aufnahmestellen an die Vielzahl der Transportelemente übergeben und entsprechend durch geeignet ausgestaltete Abförderer an den Abgabestellen von der Vielzahl der Transportelemente übernommen.

Um eine Transporteinrichtung einer solchen Behälterbehandlungsanlage mit einzeln steuerbaren Transportelementen zu betreiben, sind eine Vielzahl von Transportelementen nötig, um die Vielzahl der zu behandelnden Behälter, die sich im Eingriff der Behälterbehandlungsanlage befinden, zu bewegen. Um die Kosten der Transportelemente und somit der gesamten Behälterbehandlungsanlage möglichst niedrig zu halten, ist es wichtig, ein möglichst günstiges Führungs- und Lagersystem für die Transportelemente zu verwenden. Da die Gesamtlänge der Transporteinrichtung und somit des Führungs- und Lagersystems je nach Behälterbehandlungsanlage erheblich sein kann, ist es möglich, dass durch den Betrieb der Transporteinrichtung Schmutz und/oder Schadstellen am Führungs- und Lagersystem auftreten, welche, falls sie nicht rechtzeitig erkannt und behoben werden, zum Stillstand der gesamten Behälterbehandlungsanlage und zu einem damit verbundenem Produktionsverlust führen können. Eine manuelle Prüfung und Wartung des Führungs- und Lagersystems durch das Bedienpersonal ist jedoch sehr aufwendig und zeit- und kostenintensiv.

Im Allgemeinen werden Behälterbehandlungsanlagen zur Produktion verschiedener Produkte, z.B. verschiedener flüssiger Lebensmittel, verschiedener Behälter, Behälter mit unterschiedlichen Etiketten oder Ähnlichem, in getrennten Produktionsphasen derselben Behälterbehandlungsanlage verwendet. Dazu ist es nötig, benötigte Formatteile und/oder Rüstteile einer oder mehrerer Behandlungseinheiten, z.B. einer Streckblasvorrichtung, ohne großen Zeitverlust auszutauschen. Ebenso müssen einzelne Behandlungseinheiten, wie z.B. eine Reinigungsvorrichtung, eine Etikettiervorrichtung oder eine Verpackungsvorrichtung, der Behälterbehandlungsanlage während des Betriebs laufend mit Medien versorgt werden und andere Behandlungseinheiten, wie z.B. eine Füllvorrichtung, in regelmäßigen Zeitabständen gereinigt werden. Die benötigten Formatteile bzw. Rüstteile, Medien und/oder Reinigungshilfselemente, wie z.B. Cleaning in Place (CIP) Kappen, müssen dabei im Allgemeinen manuell durch das Bedienpersonal in die jeweiligen Behandlungseinheiten eingebracht bzw. an ihnen positioniert werden. Selbst bei semiautomatischer Montage der entsprechenden Teile an der jeweiligen Behandlungseinheit ist daher aufgrund des manuellen Zu- und Abtransports der Teile ein Verlust an Produktionszeit im Allgemeinen unvermeidbar. Zudem ergeben sich bei jedem Eingriff in die Anlage durch das Bedienpersonal Gefahren für die Gesundheit des Bedienpersonals. EP 3 003 926 B1 beschreibt eine Transporteinrichtung nach dem Oberbegriff des Anspruchs 1.

Es liegt somit der vorliegenden Erfindung die Aufgabe zugrunde, eine Vorrichtung und ein Verfahren zum Transport von Behältern in einer Behälterbehandlungsanlage zur Verfügung zu stellen, welches automatisch Sonderfunktionen, wie Prüfen, Reinigen, Umbau und/oder Reparatur der Behälterbehandlungsanlage durchführt und somit die oben genannten Nachteile überwindet. Insbesondere ist ein Stillstand der Behälterbehandlungsanlage aufgrund eines fehlerhaften Führungs- und Lagersystems zu vermeiden. Ganz allgemein liegt der vorliegenden Erfindung die Aufgabe zugrunde, die Kosten für die Installation und den Betrieb einer Transporteinrichtung zum Transport von Behältern in einer Behälterbehandlungsanlage mit einer Vielzahl von einzeln steuerbaren Transportelementen zu reduzieren.

### Beschreibung der Erfindung

Die oben genannten Aufgaben werden gelöst durch eine Transporteinrichtung nach Anspruch 1, zum Transport von Behältern in einer Behälterbehandlungsanlage mit
einer Transportbahn,
einer Vielzahl von Transportelementen zum Transportieren eines oder mehrerer Behälter, wobei die Vielzahl der Transportelemente bewegbar an der Transportbahn angeordnet sind, mindestens einem Sonderelement, das an der Transportbahn bewegbar angeordnet und verschieden von der Vielzahl der Transportelemente ist, und
einer Steuer- und/oder Regeleinheit,
wobei die Transportbahn, die Vielzahl der Transportelemente und das Sonderelement derart ausgestaltet sind, dass die Vielzahl der Transportelemente und das Sonderelement mittels der Steuer- und/oder Regeleinheit einzeln steuerbar entlang der Transportbahn geführt werden können.

Unter Transporteinrichtungen werden hier und im Folgenden Fördereinrichtungen verstanden, die für die Behälter Transportelemente aufweisen, welche in einem geschlossenen Kreislauf gefördert werden. Dies schließt jedoch nicht aus, dass zumindest Teilstrecken der Transporteinrichtung keinen geschlossenen Kreislauf bilden.

Erfindungsgemäß weist die Transporteinrichtung eine Vielzahl von Transportelementen zum Transportieren eines oder mehrerer Behälter auf, wobei die Vielzahl der Transportelemente bewegbar an einer Transportbahn der Transporteinrichtung angeordnet sind. Dabei kann die Vielzahl von Transportelementen eine Vielzahl von gleich gestalteten Transportelementen umfassen, welche einzeln und unabhängigen voneinander entlang der Transportbahn bewegt werden können. Dies schließt jedoch nicht aus, dass sich einzelne Transportelemente bezüglich einer oder mehrerer Merkmale voneinander unterscheiden. Insbesondere kann die Vielzahl von Transportelementen wenigstens zwei Gruppen von jeweils gleich gestalteten Transportelementen umfassen, welche sich untereinander aufgrund wenigstens eines Merkmals, z.B. eines funktonalen Elements wie eines Greifelements und/oder einer Ausführung des weiter unten beschriebenen Reaktionselements, unterscheiden. Die Anzahl der Transportelemente an der Transportbahn ist dabei prinzipiell beliebig und lediglich durch die Länge der Transportbahn begrenzt, solange nur mindestens zwei Transportelemente vorhanden sind.

Zur Aufnahme des mindestens eines Behälters an einer Aufnahmestelle und zur Abgabe der Behälter an einer Abgabestelle können die Transportelemente mit einer geeigneten Haltevorrichtung, z.B. in Form eines Greifelements, ausgestattet sein. Das Greifelement kann dabei passiv oder aktiv steuerbar ausgebildet sein. Insbesondere sind Greifelemente zum formschlüssigen oder kraftschlüssigen Greifen eines Halsbereichs der Behälter, z.B. beim sogenannten Neckhandling von Kunststoffflaschen, vorstellbar, wobei der gehaltene Behälter beim formschlüssigen Greifen um seine Längsachse in dem Greifelement drehbar gelagert ist. Zudem kann das Greifelement schwenkbar und/oder höhenverstellbar ausgebildet sein.

Behälter im Sinne der Erfindung sind insbesondere Getränkeflaschen, aber auch andere Behälter für Lebensmittel, Medikamente, Hygieneartikel, Reinigungsmittel oder dergleichen, wie z.B. Dosen, Glasflaschen oder andere Glasbehälter mit Deckel, Verpackungen auf der Basis von Karton oder Verbundstoffen, Tetrapack oder Ähnliches. Ebenso sind bei Behältern aus Kunststoff auch Zwischenprodukte, insbesondere Vorformlinge zum Streckblasen der Behälter vorstellbar. Des Weiteren sind unter Behältern im Sinne der Erfindung auch zusammengestellte Gebinde mit mehreren Behältern zu verstehen.

Erfindungsgemäß umfasst die Transporteinrichtung mindestens ein Sonderelement, das an der Transportbahn ebenso wie die Transportelemente bewegbar angeordnet, jedoch verschieden von der Vielzahl der Transportelemente ist. Insbesondere kann sich das mindestens eine Sonderelement von der Vielzahl der Transportelemente dadurch unterscheiden, dass es keine Haltevorrichtung für die Behälter aufweist und somit nicht dem Transport der Behälter in der Behälterbehandlungsanlage dient. Stattdessen weist das mindestens eine Sonderelement im Allgemeinen eine oder mehrere Vorrichtungen auf, welche dazu ausgebildet sind, eine oder mehrere Sonderfunktionen, also nicht das Transportieren von Behältern, der Transporteinrichtung durchzuführen, und welche der Vielzahl von Transportelementen fehlen. Abgesehen von diesen zusätzlichen, weiter unten beschriebenen Vorrichtungen, kann das mindestens eine Sonderelement, insbesondere in Hinblick auf seinen Antrieb, entsprechend der Vielzahl von Transportelementen ausgebildet sein.

Die Transportelemente und das Sonderelement können als Läufer, Puck, Schlitten, Shuttle oder dergleichen ausgebildet sein, welche durch Wechselwirkung mit der Transportbahn bewegt werden. Jedes Transportelement bzw. Sonderelement kann dabei je nach Bedarf an der Transportbahn beschleunigt, abgebremst, mit konstanter Geschwindigkeit bewegt oder auch zeitweise ganz angehalten werden. Insbesondere kann das Sonderelement zur Ausführung einer der weiter unten beschriebenen Sonderfunktionen an einer vorgegebenen Stelle der Transportbahn zeitweise angehalten werden. Durch individuelles Steuern der Transportelemente und des Sonderelements lässt sich somit ein variables Weg-Zeit-Profil jedes einzelnen Transportelements bzw. des Sonderelements realisieren. Des Weiteren kann jedes Transportelement und/oder das Sonderelement eine eindeutige Identifikationseinheit, z.B. in Form eines Strichcodes, auslesbaren Speicherchips, eines aufgedruckten, aufgeklebten und/oder eingravierten alphanumerischen Codes, etc., umfassen, wobei durch eine oder mehrere geeignete Identifikationserfassungsvorrichtungen entlang der Transportbahn eine Identifikation des Transportelements bzw. Sonderelements, welches die entsprechende Identifikationserfassungsvorrichtung passiert, ermöglicht wird. Die Identifikationseinheit des Transportelements bzw. Sonderelements kann insbesondere zum gezielten Leiten des Transportelements bzw. Sonderelements, z.B. zu einer bestimmten Abgabestelle bzw. zu einer vorgegebenen Stelle der Transportbahn, eingesetzt werden.

Die Form der Transportbahn ist grundsätzlich beliebig. Insbesondere kann die Transportbahn im Wesentlichen geschlossen sein, wobei im Wesentlichen geschlossen bedeutet, dass die Transportbahn mindestens einen geschlossenen Weg für die Transportelemente bzw. das Sonderelement ermöglicht. In einer Ausführungsform kann dies durch Bereitstellen einer Rückführstrecke als Teil der Transportbahn realisiert werden, wobei die Rückführstrecke ein Rückführen der Transportelemente von einer Abgabestelle zu einer Aufnahmestelle ermöglicht. Die Transportbahn kann jedoch auch zumindest teilweise offen ausgestaltet sein, in der Art, dass wenigstens eine Teilstrecke der Transportbahn als Sackgasse für die Transportelemente ausgeführt ist, wobei eine Rückführung der Transportelemente durch Umkehr der Bewegungsrichtung ermöglicht werden kann. Insbesondere kann eine derartige Sackgasse an einer Abgabestelle enden.

Erfindungsgemäß sind die Transportbahn, die Vielzahl der Transportelemente und das Sonderelement derart ausgestaltet, dass die Vielzahl der Transportelemente und das Sonderelement mittels einer Steuer- und/oder Regeleinheit der Transporteinrichtung einzeln steuerbar entlang der Transportbahn geführt werden können. Zum Führen der Transportelemente bzw. des Sonderelements beim Bewegen des Transportelements bzw. des Sonderelements entlang der Transportbahn kann die Transportbahn eine Führungsschiene und/oder einen Führungskanal aufweisen. Dementsprechend können die Transportelemente und das Sonderelement einen komplementären Führungskanal, ein komplementäres Führungselement, z.B. einen Führungsstift, und/oder eine oder mehrere geeignet angeordnete Führungsrollen aufweisen, welche z.B. mittels eines Spurkranzes auf der Führungsschiene der Transportbahn laufen. Eine Vielzahl alternativer Ausführungsformen, z.B. mittels des weiter unten beschriebenen Gleitlagers, ist hier vorstellbar. Durch das Bereitstellen mindestens einer Führungsschiene an der Transportbahn kann ein reibungsarmes Gleiten der Transportelemente bzw. des Sonderelements entlang der Transportbahn ermöglicht werden. Darüber hinaus kann die Transportbahn über eine Lauffläche verfügen, auf welcher entsprechende Stützelemente, z.B. Stützrollen, abrollen bzw. gleiten können.

Erfindungsgemäß werden die Vielzahl der Transportelemente und das mindestens eine Sonderelement mittels einer Steuer- und/oder Regeleinheit, z.B. in Form eines Prozessrechners, entlang der Transportbahn geführt. Die Steuer- und/oder Regeleinheit kann dabei Teil einer Steuer- und/oder Regeleinheit der Behälterbehandlungsanlage sein oder als separate Steuer- und/oder Regeleinheit der Transporteinrichtung ausgebildet sein. Weiterhin kann die Steuer- und/oder Regeleinheit durch ein zentrale Steuer- und/oder Regeleinheit und/oder durch dezentral an den Transportelementen bzw. dem Sonderelement angeordnete Steuer- und/oder Regeleinheiten realisiert werden. Des Weiteren können die eine oder mehrere Steuer- und/oder Regeleinheiten als speicherprogrammierbare Steuereinheit(en) SPS ausgebildet sein.

Erfindungsgemäß sind die Vielzahl der Transportelemente, das Sonderelement und zumindest ein Abschnitt der Transportbahn derart ausgebildet, dass die Vielzahl der Transportelemente und das Sonderelement im Bereich des Abschnitts der Transportbahn mittels einer magnetischen Kraft, vorzugweise in Wechselwirkung mit der Transportbahn, bewegt werden können. Erfindungsgemäß sind die Transportbahn, die Transportelemente und das Sonderelement derart ausgestaltet, dass jedes Transportelement und das Sonderelement einzeln steuerbar entlang der Transportbahn, z.B. von einer Aufnahmestelle zu einer Abgabestelle bzw. zu einer vorgegebenen Stelle der Transportbahn, geleitet werden können. Dies bedeutet, dass die Transportelemente und das Sonderelement jeweils mindestens ein Reaktionselement aufweisen, welches mittels mechanischer und/oder elektromagnetischer Wechselwirkung mit entlang der Transportbahn angeordneten Wechselwirkungselementen eine Kraft erfährt, durch welche die Transportelemente bzw. das Sonderelement beschleunigt und somit bewegt werden können. Durch gezieltes Ansteuern des Reaktionselements eines bestimmten Transportelements bzw. Sonderelements und/oder einer oder mehrerer Wechselwirkungselemente in einem begrenzten Bereich der Transportbahn kann diese Kraftausübung auf ein bestimmtes Transportelement bzw. Sonderelement beschränkt werden, wodurch das Transportelement bzw. Sonderelement einzeln und unabhängig von anderen Transportelementen und Sonderelementen entlang der Transportbahn geleitet werden kann. In der beschriebenen Weiterbildung können die Transportelemente und das mindestens eine Sonderelement mittels einer magnetischen Kraft, vorzugsweise in Wechselwirkung mit der Transportbahn, bewegt werden. Dabei erfolgt die individuelle Steuerung der Transportelemente bzw. des Sonderelements bzw. das Ansteuern der Reaktionselemente und/oder der Wechselwirkungselemente mittels der Steuer- und/oder Regeleinheit der Transporteinrichtung.

Somit kann der entsprechende Abschnitt der Transportbahn mit einem magnetischen Linearantrieb, z.B. in Form eines asynchronen linearen Motors, ausgestattet sein. Dazu wird der entsprechende Abschnitt der Transportbahn mit einer Vielzahl von elektrischen Wicklungen in Form von einzeln ansteuerbaren Elektromagneten ausgerüstet. Um eine magnetische Wechselwirkung zwischen einem Transportelement bzw. Sonderelement und den einzeln ansteuerbaren Elektromagneten der Transportbahn zu erzeugen, kann das Transportelement bzw. Sonderelement mit einem oder mehreren Permanentmagneten bzw. nicht schaltenden Elektromagneten oder Eisenkernen ausgestattet werden. In einer möglichen Ausführung ist das Transportelement bzw. Sonderelement als ein passives Transportelement bzw. Sonderelement ausgeführt, welches durch Wechselwirkung mit den von den einzeln ansteuerbaren Elektromagneten der Transportbahn erzeugten elektromagnetischen Wechselfeldern bewegt wird. Der mindestens eine Permanentmagnet bzw. nicht schaltende Elektromagnet bzw. Eisenkern des Transportelements bzw. Sonderelements bildet somit das oben erwähnte Reaktionselement, während die einzeln ansteuerbaren Elektromagnete der Transportbahn die oben erwähnten Wechselwirkungselemente bilden. Bevorzugt ist bei Verwendung von passiven Transportelementen bzw. Sonderelementen eine Lokalisierungseinheit an der Transportbahn angebracht, um die Lage wenigstens eines Transportelements bzw. Sonderelements und bevorzugt aller Transportelemente bzw. Sonderelemente zu ermitteln und an die Steuer- und/oder Regeleinheit zur Steuerung der Elektromagnete der Transportbahn weiterzugeben. Die Stromstärke durch die elektrischen Wicklungen der Transportbahn kann von der Steuer- und/oder Regeleinheit in Abhängigkeit von einem Kraftbedarf des zu bewegenden Transportelements bzw. Sonderelements automatisch angepasst werden. Durch individuelles Steuern und/oder Regeln der Stromstärke durch einzelne Wicklungen der Transportbahn kann das Transportelement bzw. Sonderelement beschleunigt, abgebremst oder mit einer konstanten vorgegebenen Geschwindigkeit bewegt werden.

Bei einer alternativen Ausführungsform ist das Transportelement bzw. Sonderelement als aktives Transportelement bzw. Sonderelement mit elektrischen Wicklungen versehen, welche die für den Antrieb notwendigen magnetischen Wechselfelder aufbringen können. Entsprechend wird der Abschnitt der Transportbahn mit Permanentmagneten bzw. nicht schaltenden Elektromagneten versehen. Hierbei können sowohl die für den Antrieb nötige elektrische Energie als auch für die Steuerung nötige Signale via Induktionsübertragung an die Transportelemente bzw. an das Sonderelement übertragen werden. Die Steuerung kann sich demnach dezentral auf den jeweiligen Transportelementen bzw. dem Sonderelement befinden oder auch zentral in einer eigenen Steuereinheit untergebracht sein. Alternativ dazu kann die nötige elektrische Energie über eine entlang der Transportbahn angeordnete Leitung an die Transportelemente bzw. an das Sonderelement übertragen werden. Des Weiteren ist eine Kombination der Ausführung der Transportelemente bzw. des Sonderelements als aktive Transportelemente bzw. aktives Sonderelement mit einer Transportbahn mit einzeln ansteuerbaren Elektromagneten denkbar.

Neben dem oben beschriebenen, als Magnettrasse ausgebildeten Abschnitt der Transportbahn kann die Transportbahn weiterhin wenigstens eine Teilstrecke umfassen, entlang der die Transportelemente und das Sonderelement mit einer konstanten Geschwindigkeit bewegt werden können. Die Teilstrecke kann hierzu eine Antriebsvorrichtung in Form eines Transportbandes, einer Transportkette oder von ähnlichem umfassen. Durch Kombination von Teilstrecken mit Magnetantrieb und Teilstrecken mit einem mechanischen Antrieb können die Installationskosten der gesamten Transporteinrichtung gesenkt werden. In einer vorteilhaften Weiterbildung entspricht die Ausführung der beschriebenen Reaktionselemente der Transportelemente der Ausführung des Reaktionselements des mindestens einen Sonderelements. Durch gleich gestaltete Ausführung der Reaktionselemente der Vielzahl der Transportelemente und des mindestens einen Sonderelements lässt sich eine Wartung der Transportelemente und des Sonderelements vereinfachen.

In einer weiteren Weiterbildung können die Vielzahl der Transportelemente und das Sonderelement vollständig magnetisch oder teilweise magnetisch und teilweise mechanisch oder vollständig mechanisch an der Transportbahn gelagert sein. Bei vollständig magnetischer Lagerung ist der oben beschriebene Abschnitt der Transportbahn als Magnetschwebebahn ausgebildet, wobei elektrische Wicklungen in der Transportbahn und/oder dem Transportelement bzw. Sonderelement vorgesehen sind, welche eine magnetische Levitation des Transportelements bzw. Sonderelements über der Transportbahn bewirken. Dadurch lässt sich die Reibung zwischen dem Transportelement bzw. Sonderelement und der Transportbahn auf ein Minimum reduzieren. Bei teilweise magnetischer und teilweise mechanischer Lagerung kann das Transportelement bzw. Sonderelement zusätzlich ein oder mehrere Stützelemente, z. B. in Form von Stützrollen und/oder Führungsrollen, aufweisen. Ebenso ist eine teilweise oder vollständig mechanische Lagerung mittels mindestens eines Gleitlagers denkbar. Besonders kostengünstig ist eine Ausführung der Lagerung der Transportelemente und des Sonderelements mittels Gleitlager in Kombination mit einer oder mehrerer Führungsschienen der Transportbahn. Die zusätzlichen Stützelemente bzw. Gleitlager rollen bzw. gleiten dabei auf einer Lauffläche der Transportbahn. Bei vollständig mechanischer Lagerung kann das Transportelement bzw. Sonderelement ausschließlich durch das beschriebene mindestens eine Stützelement bzw. Gleitlager gelagert sein. Ergänzend oder alternativ hierzu kann eine Lagerung auch pneumatisch erfolgen, wobei die Transportbahn in dem entsprechenden Teilstück als Luftschwebebahn ausgeführt ist. Bei pneumatischer Lagerung ergibt sich, wie auch bei vollständig magnetischer Lagerung, eine Minimierung der Reibung zwischen dem Transportelement bzw. Sonderelement und der Transportbahn.

Gemäß einer Weiterbildung kann das mindestens eine Sonderelement eine Prüfvorrichtung aufweisen, welche dazu ausgebildet ist, einen Zustand der Transportbahn an einer vorgegebenen Stelle der Transportbahn zu bestimmen. Die Prüfvorrichtung kann so ausgebildet sein, dass sie ganz allgemein die Transportbahn an der vorgegebenen Stelle auf Verschmutzungen und/oder Schäden untersucht oder auch speziell eine spezifische Eigenschaft der Transportbahn, z. B. bezüglich der weiter unten beschriebenen Reibung eines oder mehrerer Lagerelemente des Sonderelements bei Bewegungen entlang der Transportbahn, prüft. Der geprüfte Zustand der Transportbahn kann dabei entweder qualitativ oder quantitativ erfasst werden. Eine qualitative Prüfung, z. B. auf Schäden an einem Teil der Transportbahn, wie z. B. einer Führungsschiene, einer Lauffläche oder den Wechselwirkungselementen, kann insbesondere zu einem binären Ergebnis, in der Form von "beschädigt"/"nicht beschädigt", führen. Zur qualitativen Prüfung des Zustands der Transportbahn kann die Prüfvorrichtung insbesondere ein optisches Element in Form einer Digitalkamera umfassen, welche ein oder mehrere Fotos der vorgegebenen Stelle der Transportbahn aufnimmt.

Eine solche Digitalkamera kann in einer Weiterbildung auch in einen Videomodus zum kontinuierlichen Aufnehmen von Bildern der Transportbahn während einer geführten Bewegung des Sonderelements entlang der Transportbahn verwendet werden. Das oder die erzeugten Fotos der Transportbahn können hierbei unmittelbar durch die Prüfrichtung, insbesondere durch eine Prozesseinheit der Prüfrichtung, analysiert werden oder alternativ zum Zwecke einer Analyse an die Steuer- und/oder Regeleinheit der Transporteinrichtung übermittelt werden (siehe unten). Eine Analyse, sei es durch die Prüfrichtung oder durch die Steuer- und/oder Regeleinheit, kann nach einem der im Stand der Technik bekannten Bildverarbeitungsverfahren erfolgen, wobei z. B. Verformungen, Einkerbungen, mangelhafte Ausrichtung oder stärkere Verschmutzungen der Transportbahn detektiert werden können.

Bei einer quantitativen Prüfung der vorgegebenen Stelle der Transportbahn durch die Prüfvorrichtung kann ein vorgegebener Zustandsparameter der Transportbahn an der vorgegebenen Stelle bestimmt werden. Ein solcher Zustandsparameter ist beispielsweise durch einen Reibungskoeffizienten eines Lager- bzw. Stützelements des Sonderelements an der Transportbahn, eine elektrische Leitfähigkeit oder einen Reflektionsgrad einer Oberfläche der Transportbahn gegeben sein. Dabei kann der Reflektionsgrad einer metallischen Oberfläche, z. B. einer Lauffläche oder Führungsschiene der Transportbahn, als Indikator für eine Verschmutzung der Oberfläche, z. B. durch Staub oder Schmiermittel, dienen. Ein solcher Reflektionsgrad kann beispielsweise mittels eines Laserelements und eines Lichtdetektors der Prüfvorrichtung bestimmt werden. Ebenso kann die Leitfähigkeit einer metallischen Oberfläche der Transportbahn, insbesondere einer Lauffläche oder einer Führungsschiene der Transportbahn, mittels elektrischer Kontakte des Sonderelements mit der metallischen Oberfläche, z. B. in Form von Kohlebürsten, bestimmt werden. Wie der Reflektionsgrad kann auch die gemessene Leitfähigkeit der metallischen Oberfläche als Indikator für eine Verschmutzung der metallischen Oberfläche dienen. Eine Vielzahl alternativer Prüfverfahren zum Detektieren einer Verschmutzung der Transportbahn ist hierbei denkbar.

Die zu prüfende Stelle der Transportbahn kann insbesondere mittels der Steuer- und/oder Regeleinheit der Transporteinrichtung vorgegeben werden. Dabei ist eine Vorgabe der Stelle durch das Bedienpersonal mittels einer Eingabevorrichtung der Transporteinrichtung möglich, um eine bestimmte Stelle der Transportbahn zu untersuchen. Außerdem kann, durch die Steuer- und/oder Regeleinheit der Transporteinrichtung gesteuert, ein regelmäßiges Überprüfen ganzer Abschnitte und sogar der gesamten Transportbahn erfolgen. Hierzu führt die Steuer und/oder Regeleinheit der Transporteinrichtung das Sonderelement mit der Prüfrichtung entlang des entsprechenden Abschnitts bzw. entlang der Transportbahn, insbesondere mit dem Strom an Transportelementen. Während des Führens entlang der Transportbahn bestimmt das Sonderelement in vorgegebenen zeitlichen bzw. räumlichen Abständen den Zustand der Transportbahn. Durch das Mitführen des Sonderelements mit dem Strom der Transportelemente entlang der Transportbahn kann eine Prüfung ganzer Teilstrecken der Transportbahn bei laufendem Betrieb der Behälterbehandlungsanlage erfolgen. Bei Bedarf kann das Sonderelement mit der Prüfvorrichtung über eine oder mehrere Weichen der Transportbahn in den Strom der Transportelemente eingeschleust bzw. aus diesem ausgeschleust werden. Eine möglichst vollständige Überprüfung der Transportbahn kann insbesondere während eines Initialisierungsvorgangs der Transporteinrichtung bzw. der Behälterbehandlungsanlage mittels der Steuer- und/oder Regeleinheit durchgeführt werden. Eine evtl. benötigte Versorgung des Sonderelements mit elektrischer Energie kann wie bereits oben beschrieben via Induktionsübertragung und/oder mittels eines elektrischen Kontakts mit einer entlang der Transportbahn angeordneten Leitung an das Sonderelement übertragen werden.

In einer weiteren Weiterbildung kann das Sonderelement weiterhin eine Sendeeinheit aufweisen, wobei die Steuer- und/oder Regeleinheit eine Empfangseinheit aufweist, und wobei die Prüfvorrichtung weiterhin dazu ausgebildet ist, ein den bestimmten Zustand beschreibendes Signal, insbesondere in Form eines Zustandsparameters der Transportbahn, an die Steuer- und/oder Regeleinheit zu senden. Bei der Sendeeinheit kann es sich um eine im Stand der Technik bekannte Sendeeinheit zur kabellosen Übertragung von Signalen, insbesondere mittels modulierter elektromagnetischer Wellen, handeln. Entsprechend kann es sich bei der Empfangseinheit der Steuer- und/oder Regeleinheit um eine im Stand der Technik bekannte Empfangseinheit für kabellos übertragene Signale, insbesondere in Form modulierter elektromagnetischer Wellen, handeln. Mittels der Sendeeinheit überträgt somit das Sonderelement ein den bestimmten Zustand beschreibendes Signal an die Empfangseinheit der Steuer- und/oder Regeleinheit der Transporteinrichtung, welche das Signal mittels einer Prozesseinheit der Steuer- und/oder Regeleinheit verarbeiten kann und/oder das Signal in einer vorgegebenen Form auf einem Anzeigegerät, z. B. zur Interpretation durch das Bedienpersonal, darstellen kann. Bei dem den bestimmten Zustand beschreibenden Signal kann es sich wie oben beschrieben um ein Foto der vorgegebenen Stelle der Transportbahn, ein Ergebnis einer Auswertung eines solchen Fotos, z. B. in Form einer binären Qualifikation der vorgegebenen Stelle als beschädigt bzw. nicht beschädigt, oder einen der oben beschriebenen Zustandsparameter der Transportbahn handeln. Als spezielle Ausführungen sollen hier erneut die Zustandsparameter Reibungskoeffizient für die Bewegung des Sonderelements entlang der Transportbahn, Reflektionsgrad eines Teils der Transportbahn und elektrische Leitfähigkeit eines Teils der Transportbahn genannt werden. Die vorliegende Erfindung ist jedoch nicht auf die genannten Zustandsparameter beschränkt, sondern umfasst jeden einen Zustand der Transportbahn, insbesondere in Hinblick auf Beschädigungen und/oder Verschmutzungen, beschreibenden Zustandsparameter.

Das Durch die Sendeeinheit des Sonderelements übertragene Signal kann nach Empfangen durch die Steuer- und/oder Regeleinheit weiterverarbeitet werden und/oder in einer Speichereinheit der Steuer- und/oder Regeleinheit, z. B. zur späteren Verarbeitung, abgelegt werden.

Ebenso kann das Signal wie oben erwähnt zur Auswertung durch das Bedienpersonal auf einem dafür vorgesehenen Anzeigegerät wiedergegeben werden. Durch Analyse des übertragenen Signals kann die Steuer- und/oder Regeleinheit der Transporteinrichtung eine eventuell benötigte Reinigung bzw. Wartung der entsprechenden Stelle der Transportbahn einleiten (siehe unten). Bei Diagnose von Beschädigungen, welche nicht automatisch behoben werden können und zudem den Betrieb der Behälterbehandlungsanlage und/oder die Qualität der hergestellten Produkte erheblich beeinflussen können, kann die Steuer- und/oder Regeleinheit der Transporteinrichtung derart ausgebildet sein, dass sie die Transporteinrichtung und/oder Behälterbehandlungsanlage zum Zwecke der Wartung bzw. Reparatur automatisch abfährt.

Gemäß einer Weiterbildung können die Vielzahl der Transportelemente und das Sonderelement zumindest teilweise mechanisch an der Transportbahn gelagert sein, wobei die Prüfvorrichtung dazu ausgebildet ist, einen Reibungskoeffizienten mindestens eines Lagerelements des Sonderelements an der Transportbahn zu bestimmen. Dabei kann die zumindest teilweise mechanische Lagerung der Vielzahl der Transportelemente und des Sonderelements an der Transportbahn wie oben beschrieben mittels mechanischer Lagerelemente, wie z. B. Stützelementen, Stützrollen und/oder Gleitlager, erfolgen. Entsprechend kann die Transportbahn wie ebenfalls oben beschrieben komplementäre Lagerelemente, wie z. B. eine oder mehrere Führungsschienen, einen Führungskanal und/oder eine Lauffläche aufweisen. Die Lagerelemente der Transportelemente bzw. des Sonderelements unterliegen wie auch die komplementären Lagerelemente der Transportbahn aufgrund der zumindest teilweise mechanischen Lagerung einem mit der Zeit fortschreitenden Verschleiß, insbesondere durch Abrieb, Aufrauen und/oder Korrosion, welcher durch einen geeignet gewählten Verschleißgrad quantifiziert werden kann. Der Verschleißgrad des oder der Lagerelemente des Transportelements bzw. Sonderelements und der Verschleißgrad des oder der komplementären Lagerelemente der Transportbahn wirken sich dabei unmittelbar auf den Reibungskoeffizienten des Lagerelements bei einer Bewegung des Transportelements bzw. Sonderelements entlang der Transportbahn aus. Zunehmender Verschleiß des Lagerelements bzw. des komplementären Lagerelements führt dabei im Allgemeinen zu einer Zunahme des Reibungskoeffizienten und dadurch zu einem erhöhten Kraftaufwand für das Bewegen der Vielzahl der Transportelemente entlang der Transportbahn bei vorgegebenen Geschwindigkeit.

Um einem unnötigen Energieverbrauch durch einen aufgrund des Verschleißes erhöhten Reibungskoeffizienten entgegen zu wirken, kann die Prüfvorrichtung des Sonderelements gemäß der vorliegenden Weiterbildung einen Reibungskoeffizienten mindestens eines Lagerelements des Sonderelements an der Transportbahn bestimmen. Hierzu ist der Verschleißgrad des Lagerelements des Sonderelements vorteilhafterweise zum Zeitpunkt des Prüfens bekannt, sodass der bestimmte Reibungskoeffizient als Indikator für den Verschleißgrad des oder der komplementären Lagerelemente der Transportbahn dienen kann. Insbesondere kann durch regelmäßiges und rechtzeitiges erneuern des oder der Lagerelemente des Sonderelements erreicht werden, dass der Verschleißgrad des oder der Lagerelemente des Sonderelements zum Zeitpunkt des Prüfens innerhalb vorgegebener Toleranzen bekannt ist.

Der Reibungskoeffizient des mindestens einen Lagerelements des Sonderelements kann beispielsweise anhand des sog. Schleppfehlers beim Bewegen des Sonderelements mit einer vorgegebenen Geschwindigkeit entlang der Transportbahn bestimmt werden. Zu diesem Zweck kann die Transportbahn neben der Vielzahl von Wechselwirkungselementen, welche das Sonderelement vorzugsweise mittels einer magnetischen Kraft antreiben, eine Vielzahl von entlang der Transportbahn angeordneten Sensoren, insbesondere Magnetfeldsensoren, zur Bestimmung einer Position des Sonderelements entlang der Transportbahn aufweisen. Die Wechselwirkungselemente können hierbei insbesondere durch die weiter oben beschriebenen Wechselwirkungselemente zum Bewegen des Sonderelements mittels einer magnetischen Kraft gegeben sein. Dabei werden die Wechselwirkungselemente der Transportbahn, welche insbesondere als elektrische Wicklungen ausgebildet sein können, durch die Steuer- und/oder Regeleinheit im Allgemeinen automatisch mit einem elektrischen Strom beaufschlagt, welcher dazu geeignet ist, die Transportelemente bzw. das Sonderelement mit einer gewünschten Geschwindigkeit bzw. Beschleunigung entlang der Transportbahn zu bewegen. Bei unzureichender Stromstärke bzw. bei erhöhter Reibung tritt dabei der oben genannte Schleppfehler des Linearmotors, welcher durch die Wechselwirkungselemente der Transportbahn gebildet wird, auf. Dieser Schleppfehler kann hierbei durch die Vielzahl von entlang der Transportbahn angeordneten Sensoren zur Bestimmung einer Position des Sonderelements bestimmt werden.

Insbesondere kann durch regelmäßige und periodische Anordnung von Sensoren entlang eines Abschnitts der Transportbahn die Position eines Transportelements bzw. des Sonderelements auf diesem Abschnitt der Transportbahn bestimmt werden. Dabei kann der Sensor als optischer Sensor, elektrischer Sensor, elektromagnetischer Sensor oder mechanischer Sensor ausgebildet sein, wobei z. B. durch Messen einer Lichtreflektion an einem Reflektorelement des Sonderelements, durch Induktion eines elektromagnetischen Signals aufgrund der Bewegung des Sonderelements, durch Änderungen des elektrischen Widerstandes des Sensors unter Ausnutzung eines magnetoresistiven Effektes, z. B. aufgrund des magnetischen Flusses eines magnetischen Referenzelements, insbesondere eines Permanentmagneten, oder des Reaktionselements des Sonderelements, oder durch lokale Druckmessung aufgrund des Gewichts des Sonderelements die Position des Sonderelements im Bereich des Sensors bestimmt werden kann. Ein elektromagnetischer Sensor kann dabei als Hallsensor ausgebildet sein, welcher auch dann ein Signal liefert, wenn das Magnetfeld, in dem er sich befindet, konstant ist. Ebenso ergibt sich bei der Ausführung eines elektromagnetischen Sensors als Magnetfeldsensor auf der Grundlage magnetoresistiver Effekte, wie des anisotropen magnetoresistiven Effekts (AMR-Effekt), des "gigantischen" magnetoresistiven Effekts (GMR-Effekt), sowie weiterer magnetoresistiver Effekte wie des CMR-Effekts und des TMR-Effekts, eine Änderung des elektrischen Widerstandes, welche abhängig von dem zu messenden Magnetfeld ist. Sowohl Hallsensoren als auch magnetoresistive Sensoren erlauben somit das Bestimmen der Position eines Transportelements bzw. des Sonderelements entlang der Transportbahn auch ohne induktive Effekte, d. h. auch bei stillstehendem Transportelement bzw. Sonderelement. Dabei detektiert der entsprechende Sensor eine lokale Veränderung des Hintergrundmagnetfelds durch das Reaktionselement, insbesondere durch einen daran angebrachten Permanent- bzw. Elektromagneten, des Transportelements bzw. Sonderelements. Alternativ oder zusätzlich kann das Sonderelement eine Signaleinheit aufweisen, welche ein oder mehrere Positionssignale, die von räumlich getrennten Signaleinheiten der Steuer- und/oder Regeleinheit der Transporteinrichtung gesendet werden, detektiert, um dadurch, z. B. durch Laufzeitmessungen, die Position des Sonderelements entlang der Transportbahn zu bestimmen. Diese Signaleinheit des Sonderelements kann insbesondere als RFID-Chip ausgebildet sein. Aus der Differenz der bestimmten Position des Sonderelements entlang der Transportbahn und der aufgrund der Stromstärke durch die Wechselwirkungselemente erwarteten Position kann der Schleppfehler somit von der Prüfvorrichtung des Sonderelements und/oder der Steuer- und/oder Regeleinheit der Transporteinrichtung bestimmt werden. Alternativ hierzu kann von der Steuer- und/oder Regeleinheit die elektrische Stromstärke durch die Wechselwirkungselemente der Transportbahn soweit angepasst werden, dass tatsächliche und erwartete Positionen einander entsprechen. Aus dem Schleppfehler bzw. der benötigten Erhöhung der Stromstärke kann anschließend auf den Reibungskoeffizienten des mindestens einen Lagerelements des Sonderelements an der Transportbahn geschlossen werden. Insbesondere kann durch die Prüfvorrichtung des Sonderelements und/oder die Steuer- und/oder Regeleinheit geprüft werden, ob der bestimmte Schleppfehler bzw. die bestimmte Erhöhung der Stromstärke einen vorgegebenen Toleranzwert überschreitet.

Alternativ kann die Prüfvorrichtung des Sonderelements auch derart ausgebildet sein, dass sie den Reibungskoeffizienten des mindestens einen Lagerelements des Sonderelements an der Transportbahn auch ohne Bestimmen der Position des Sonderelements entlang der Transportbahn bestimmen kann. Zu diesem Zweck kann das Sonderelement ein erstes und ein zweites Teilelement umfassen, welche über eine Schleppvorrichtung, z. B. in Form einer Feder, einer Stange, eines Kabels oder ähnlichem, verbunden sind. Das erste und das zweite Teilelement sind dabei erfindungsgemäß zumindest teilweise mechanisch an der Transportbahn gelagert, wobei die Prüfvorrichtung des Sonderelements dazu ausgebildet ist, einen Reibungskoeffizienten mindestens eines Lagerelements des geschleppten, zweiten Teilelements des Sonderelements an der Transportbahn zu bestimmen. Hierzu ist es wie bereits oben beschrieben nötig, einen Verschleißgrad des mindestens einen Lagerelements des zweiten Teilelements innerhalb vorgegebener Toleranzen zu kennen. Das erste Teilelement des Sonderelements weist dabei eines der oben beschriebenen Reaktionselemente auf, sodass die Steuer- und/oder Regeleinheit der Transporteinrichtung das erste Teilelement durch Wechselwirkung dessen Reaktionselements mit der Transportbahn, somit aktiv, bewegen kann. Insbesondere kann die Steuer- und/oder Regeleinheit der Transporteinrichtung das erste Teilelement des Sonderelements mit einer vorgegebenen, konstanten Geschwindigkeit entlang der Transportbahn bewegen. Dabei wird das zweite Teilelement aufgrund seiner Verbindung über die Schleppvorrichtung mit dem ersten Teilelement mit derselben konstanten Geschwindigkeit mitbewegt, wobei aufgrund der Reibung des mindestens einen Lagerelements des zweiten Teilelements an der Transportbahn eine konstante Kraft F auf die Schleppvorrichtung und somit auf das erste Teilelement wirkt. Diese Kraft kann mittels einer, im Stand der Technik bekannten, Messvorrichtung zu Kraftmessung, welche als Teil der Prüfvorrichtung an dem ersten oder zweiten Teilelement des Sonderelements angeordnet ist, bestimmt und als Indikator für den zu bestimmenden Reibungskoeffizienten dienen. Die gemessene Kraft und/oder der daraus bestimmte Reibungskoeffizient können anschließend wie oben beschrieben mittels einer Sendeeinheit des Sonderelements als Zustandsparameter der Transportbahn an eine Empfangseinheit der Steuer- und/oder Regeleinheit übertragen werden. Überschreitet die bestimmte Kraft bzw. der bestimmte Reibungskoeffizient einen vorgegebenen Schwellwert, so sind das oder die komplementären Lagerelemente der Transportbahn zu einem gewissen Grad verschlissen, welcher somit als Zustandsparameter der Transportbahn von der Prüfvorrichtung erfasst wird.

Eine erhöhte Reibung kann jedoch auch aufgrund von Verschmutzungen bzw. mangelnder Schmierung des oder der komplementären Lagerelemente auftreten. Zur genauen Diagnose kann das Sonderelement daher zusätzlich Prüfvorrichtungen aufweisen, welche beispielsweise über eine Bestimmung der elektrischen Leitfähigkeit der komplementären Lagerelemente der Transportbahn einen Verschmutzungsgrad bzw. einen Mangel an Schmiermittel detektieren können. Bei Überschreiten eines vorgegebenen Schwellwerts durch den bestimmten Reibungskoeffizienten bzw. die bestimmte Kraft kann von der Steuer- und/oder Regeleinheit der Transporteinrichtung eine automatische Wartung, ein automatisches Reinigen bzw. ein automatisches Abschmieren der betroffenen Stelle der Transportbahn eingeleitet werden (siehe unten). Durch regelmäßige Überwachung des Verschleißgrades des oder der komplementären Lagerelemente der Transportbahn, z.B. durch Führen des Sonderelements mit der Prüfvorrichtung entlang ganzer Teilstrecken bzw. der gesamten Transportbahn, sowie anschließende Wartung der zu wartenden Lagerelemente kann somit eine unerwünschte Zunahme des Reibungskoeffizienten und damit ein unnötiger Energieverbrauch der Transporteinrichtung vermieden werden. Hierzu kann das Sonderelement wie bereits oben erwähnt mit der entsprechenden Prüfvorrichtung mit dem Strom der Transportelemente entlang der Transportbahn mitgeführt werden, wobei eine kontinuierliche oder regelmäßige Überprüfung des Reibungskoeffizienten gesteuert von der Steuer- und/oder Regeleinheit der Transporteinrichtung erfolgen kann.

Gemäß einer Weiterbildung kann das Sonderelement eine Reinigungsvorrichtung aufweisen, welche dazu ausgebildet ist, zumindest einen Teil der Transportbahn, insbesondere eine Führungsschiene der Transportbahn, an einer vorgegebenen Stelle der Transportbahn zu reinigen. Das Reinigen der Transportbahn an der vorgegebenen Stelle kann hierbei auch ein Sterilisieren bzw. Entkeimen der vorgegebenen Stelle umfassen. Zum Reinigen kann die Reinigungsvorrichtung eine Bürste, eine Druckluftdüse, eine Düse zum Versprühen eines Reinigungsmittels, ein UV-Lichtelement zum Entkeimen oder ähnliche Reinigungselemente aufweisen, wobei weitere benötigte Elemente, wie z.B. eine Druckluftversorgung bzw. eine Versorgung mit Reinigungsmittel, durch einen mitgeführten Behälter und/oder geeignete Versorgungsleitungen der Transporteinrichtung vorliegen können. Insbesondere kann das Sonderelement mit der Reinigungsvorrichtung ein erstes und ein zweites Teilelement umfassen, welches jeweils mit einem Reaktionselement ausgestattet ist, wobei die beiden Teilelemente durch eine Zahnstange verbunden sind, welche in ein Zahnrad einer an dem zweiten Teilelement drehbar gelagerten Bürste greift. Durch Relativbewegung des ersten und des zweiten Teilelements des Sonderelements mittels der Steuer- und/oder Regeleinheit kann die Bürste somit in eine Drehbewegung versetzt werden, welche zum Entfernen von Verschmutzungen der Transportbahn verwendet werden kann. Das Reinigen des zumindest einen Teils der Transportbahn kann an speziellen, von der Steuer- und/oder Regeleinheit vorgegebenen Stellen der Transportbahn erfolgen, insbesondere wenn zuvor mittels eines Sonderelements mit einer Prüfvorrichtung eine Verschmutzung an der entsprechenden Stelle detektiert wurde. Alternativ oder ergänzend kann eine Reinigung auch durch ein durch die Steuer- und/oder Regeleinheit gesteuertes Führen des Sonderelements mit der Reinigungsvorrichtung entlang eines Abschnitts bzw. der gesamten Transportbahn erfolgen, wobei die Reinigungsvorrichtung von der Steuer- und/oder Regeleinheit aktiviert bzw. deaktiviert werden kann, um entsprechende Teilabschnitte der Transportbahn zu reinigen. Insbesondere kann die Steuer- und/oder Regeleinheit derart ausgebildet sein, dass eine solche abschnittsweise bzw. vollständige Reinigung der Transportbahn in vorgegebenen, regelmäßigen Zeitabständen erfolgt oder auch kontinuierlich durch Mitführen des Sonderelements mit der Reinigungsvorrichtung im Strom der Transportelemente stattfindet. Alternativ oder ergänzend kann eine Reinigung durch eine Eingabe des Bedienpersonals an die Steuer- und/oder Regeleinheit, insbesondere unter Eingabe des zu reinigenden Abschnitts, eingeleitet werden. Im Allgemeinen benötigen Teile der Transportbahn, welche als komplementäre Lagerelemente dienen, z.B. eine Lauffläche, eine Führungsschiene oder ein Führungskanal, regelmäßige Reinigung und/oder regelmäßiges Abschmieren. Die vorliegende Erfindung ist jedoch nicht auf das Reinigen der genannten komplementären Lagerelemente beschränkt, sondern kann außerdem das Reinigen weiterer Teile der Transportbahn und/oder einzelner Behälterbehandlungseinheiten umfassen.

Gemäß einer weiteren Weiterbildung kann das Sonderelement eine Schmiervorrichtung aufweisen, welche dazu ausgebildet ist, zumindest einen Teil der Transportbahn, an welchem die Vielzahl der Transportelemente und das Sonderelement gelagert sind, insbesondere eine Führungsschiene der Transportbahn, an einer vorgegebenen Stelle der Transportbahn mit einem Schmiermittel zu beaufschlagen. Wie bereits mehrfach beschrieben, kann es sich bei dem Teil der Transportbahn insbesondere um ein komplementäres Lagerelement der Transportbahn, z.B. eine Führungsschiene, einen Führungskanal oder eine Lauffläche, handeln. Wie oben beschrieben, kann auch hier an einer einzigen vorgegebenen Stelle Schmiermittel aufgebracht werden oder alternativ ganze Abschnitte bzw. die gesamte Transportbahn geschmiert werden. Erneut kann ein Schmierprozess von der Steuer- und/oder Regeleinheit der Transporteinrichtung gesteuert werden, wobei das Schmieren der Transportbahn durch eine Benutzereingabe eingeleitet werden kann oder auch in regelmäßigen Abständen durch die Steuer- und/oder Regeleinheit erfolgen kann. Bei dieser Weiterbildung, wie auch bei allen bisher beschriebenen Weiterbildungen, kann die Steuer- und/oder Regeleinheit der Transporteinrichtung eine Funktion der jeweiligen Vorrichtung des Sonderelements, z.B. ein Schmieren, Reinigen oder Prüfen, mittels an das Sonderelement übermittelter Signale steuern. Dabei können die Signale über einen entlang der Transportbahn angeordneten Leiter und Kontakte, über Induktionsübertragung und/oder kabellos über elektromagnetische Wellen übertragen werden. Durch regelmäßige Schmieren bzw. Schmieren aufgrund eines zuvor, z.B. mittels eines Sonderelements mit einer Prüfvorrichtung, detektierten Bedarfs kann ein Reibungswiderstand zwischen der Vielzahl der Transportelemente und der Transportbahn gering gehalten werden, wodurch Betriebskosten der Transporteinrichtung eingespart werden können.

In einer weiteren Weiterbildung kann das Sonderelement weiterhin einen Vorratsbehälter für das Schmiermittel aufweisen. Insbesondere kann der Vorratsbehälter für das Schmiermittel abnehmbar an dem Sonderelement angeordnet sein. Mittels eines abnehmbaren Vorratsbehälters lässt sich somit ein unkompliziertes Austauschen des Vorratsbehälters durch einen mit Schmiermittel gefüllten Vorratsbehälter realisieren.

Die vorliegende Erfindung ermöglicht somit ein automatisches und frühzeitiges Erkennen von Schadstellen an der Transportbahn, insbesondere an dem Führungs- und Lagersystem der Transporteinrichtung, sowie eine Automatisierung der vorbeugenden Wartung und Reinigung. Dadurch können unnötige Störungen des Produktionsablaufs vermieden werden, wodurch sich eine höhere Maschinenverfügbarkeit der Behälterbehandlungsanlage ergibt. Zudem sind weniger Eingriffe des Bedienpersonals erforderlich, welche stets eine Gefährdung des Bedienpersonals mit sich bringen.

Gemäß der Erfindung weist das Sonderelement eine Vorrichtung zum Transport von Rüstteilen auf. Gemäß einer weiteren Weiterbildung kann das Sonderelement eine Vorrichtung zum Transport von Versorgungsteilen zur Medienversorgung der Behälterbehandlungsanlage und/oder der Transporteinrichtung aufweisen. Eine solche Vorrichtung kann z.B. durch eine Haltevorrichtung für die speziellen Rüstteile bzw. Versorgungsteile gegeben sein. Rüstteile sind hierbei Teile, welche bei einem Rüstprozess bzw. Umbau der Behälterbehandlungsanlage bzw. der Transporteinrichtung verwendet werden, wie z.B. Formen, Reckanschläge, Füllventile, Formatteile oder ähnliches. Bei einem Umbau, z.B. für einen Produktwechsel, müssen die benötigten Rüstteile im Allgemeinen zu einem oder mehreren spezifischen Rüstorten, insbesondere von Behandlungseinheiten, der Behälterbehandlungsanlage transportiert werden, wo sie anschließend eingebracht, positioniert und/oder montiert werden. Erfindungsgemäß kann dieser Transport mittels eines oder mehrerer dazu speziell ausgebildeter Sonderelemente entlang der Transportbahn erfolgen. Dazu können die benötigten Rüstteile an einem Zuförderer an das mindestens eine Sonderelement übergeben, von diesem zu dem jeweiligen Rüstort transportiert und dort in die entsprechende Behandlungseinheit eingebracht werden. Die Rüstteile können mittels eines an die Transporteinrichtung koppelbaren Magazins für den Zuförderer bereitgestellt werden. Wie bereits mehrfach beschrieben werden Funktion und Bewegen des Sonderelements von der Steuer- und/oder Regeleinheit der Transporteinrichtung gesteuert. Unter Versorgungsteilen zur Medienversorgung der Behälterbehandlungsanlage sind hier insbesondere Behälter zum Transport von flüssigen oder festen Materialien zu verstehen, welche in der Behälterbehandlungsanlage verbraucht werden. Als nicht einschränkende Beispiele seien hier lediglich Behälter für Verpackungsmaterial für eine Verpackungsvorrichtung bzw. Behälter für Etiketten für eine Etikettiervorrichtung der Behälterbehandlungsanlage genannt. Die Versorgungsteile zur Medienversorgung werden, wie auch die Rüstteile, von dem Sonderelement an einer Stelle der Transportbahn aufgenommen und durch die Steuer- und/oder Regeleinheit der Transporteinrichtung gesteuert der entsprechenden Behandlungseinheit zugeführt.

In einer speziellen Weiterbildung umfasst das Sonderelement eine Vorrichtung zum Transport von Cleaning in Place (CIP) Kappen, welche als temporäre Rüstteile zur CIP-Reinigung von Füllventilen einer Füllvorrichtung der Behälterbehandlungsanlage transportiert werden können. Anders als bei den oben genannten Rüstteilen kann eine CIP-Kappe als Bestandteil des Sonderelements unmittelbar an diesem angeordnet sein, wobei insbesondere durch Relativbewegung eines ersten und zweiten Teilelements des Sonderelements eine Höhenverstellung der CIP-Kappe erreicht werden kann.

In einer weiteren Weiterbildung kann das Sonderelement weiterhin eine Montagevorrichtung aufweisen, welche dazu ausgebildet ist, ein mitgeführtes Rüstteil und/oder Versorgungsteil an einer Stelle der Behälterbehandlungsanlage und/oder der Transporteinrichtung zu positionieren und/oder anzubringen. Eine solche Montagevorrichtung kann insbesondere in Form eines durch die Steuer- und/oder Regeleinheit der Transporteinrichtung steuerbaren Roboterarms vorgesehen werden, welcher das mitgeführte Rüstteil und/oder Versorgungsteil an einer mittels der Steuer- und/oder Regeleinheit vorgegebenen Stelle der Behälterbehandlungsanlage und/oder der Transporteinrichtung positioniert und/oder anbringt. Zusätzlich kann die Montagevorrichtung derart ausgebildet sein, dass sie Rüstteile bzw. Versorgungsteile an einer Aufnahmestelle aus einem an die Transportbahn gekoppelten Magazin entnimmt, wodurch der Zuförderer entfällt.

In einer speziellen Weiterbildung kann die Transporteinrichtung zwei komplementäre Sonderelemente aufweisen, welche komplementäre Haltevorrichtungen zum Transport von Blasformen zu einer Streckblasvorrichtung der Behälterbehandlungsanlage umfassen. Dabei können die beiden Sonderelemente mittels der Steuer- und/oder Regeleinheit der Transporteinrichtung derart gegeneinander bewegt werden, dass sie eine entsprechende Blasform an einer Aufnahmestelle aufnehmen und gemeinsam als Zug entlang der Transportbahn zu der entsprechenden Streckblasvorrichtung transportieren. Die Blasformen können dabei wie andere Rüstteile in einem an die Transportbahn koppelbaren Magazin bereitgestellt werden und an der Streckblasvorrichtung automatisch, z.B. mittels eines Montageroboters, eingesetzt werden. Das Einbringen, Positionieren oder Handling der Rüstteile bzw. Versorgungsteile am Zielort kann außerdem durch eine Automatisierungseinheit des jeweiligen Sonderelements erfolgen. Mit Hilfe von Sonderelementen zum Transport und/oder zur Montage von Rüstteilen und/oder Versorgungsteilen zur Medienversorgung kann ein Umbau bzw. ein Umstellen der Behälterbehandlungsanlage auf ein anderes Produkt weitgehend automatisiert werden, wodurch erneut Produktionszeit gewonnen wird. Ein solcher Formatwechsel kann zudem kostengünstig auf Anforderung durch das Bedienpersonal, z.B. durch Eingabe in einer Eingabeeinheit der Steuer- und/oder Regeleinheit der Transporteinrichtung, erfolgen. Das mindestens eine Sonderelement zum Transport von Rüstteilen und/oder Versorgungsteilen kann hierbei bei Bedarf in den Strom der Transportelemente eingeschleust bzw. aus diesem ausgeschleust werden.

Die oben genannte Aufgabe wird auch durch ein Verfahren zum Durchführen einer Sonderfunktion einer Transporteinrichtung, welche eine Vielzahl von einzeln steuerbaren Transportelementen zum Transport von Behältern in einer Behälterbehandlungsanlage entlang einer Transportbahn umfasst, mittels eines Sonderelements, das von der Vielzahl der Transportelemente verschieden ist, gelöst, wobei die Vielzahl der Transportelemente und das Sonderelement bewegbar an der Transportbahn angeordnet sind, wobei das Verfahren die Schritte umfasst:
Bewegen des Sonderelements zu einer vorgegebenen Stelle der Transportbahn und
Durchführen der Sonderfunktion an der vorgegebenen Stelle mittels des Sonderelements,
wobei die Sonderfunktion verschieden vom Transportieren von Behältern ist, und
wobei das Bewegen durch eine Steuer- und/oder Regeleinheit der Transporteinrichtung gesteuert wird.

Hierbei können dieselben Variationen und Weiterbildungen, die oben im Zusammenhang mit der erfindungsgemäßen Transporteinrichtung beschrieben wurden, auch auf das Verfahren zum Durchführen einer Sonderfunktion angewendet werden. Insbesondere kann die Sonderfunktion ein Prüfen, Reinigen und/oder Schmieren der vorgegebenen Stelle der Transportbahn umfassen. Das Bewegen des Sonderelements zu der vorgegebenen Stelle der Transportbahn erfolgt hierbei insbesondere automatisch, z.B. mittels der Steuer- und/oder Regeleinheit der Transporteinrichtung, und insbesondere zum Durchführen der Sonderfunktion in regelmäßigen zeitlichen Abständen und/oder auf Anforderung durch das Bedienungspersonal. Sowohl das Bewegen des Sonderelements zu der vorgegebenen Stelle als auch das Steuern des Durchführens der Sonderfunktion wird erfindungsgemäß mittels der Steuer- und/oder Regeleinheit der Transporteinrichtung vorgenommen.

Gemäß einer weiteren Weiterbildung kann das Durchführen der Sonderfunktion ein Prüfen des Zustands der Transportbahn an der vorgegebenen Stelle umfassen. Dabei kann das Prüfen des Zustands, wie oben beschrieben, ein qualitatives und/oder ein quantitatives Prüfen umfassen, wobei ein den bestimmten Zustand beschreibendes Signal mittels einer Sendeeinheit des Sonderelements an eine Empfangseinheit der Steuer- und/oder Regeleinheit der Transporteinrichtung übermittelt werden kann. Das übermittelte Signal kann dabei insbesondere einen oder mehrere Zustandsparameter der Transportbahn, z.B. einen Reibungskoeffizienten, einen Reflexionsgrad, eine Kraft, eine elektrische Leitfähigkeit oder ähnliches, wie oben beschrieben umfassen. In Abhängigkeit von dem übermittelten Signal kann die Steuer- und/oder Regeleinheit der Transporteinrichtung eine eventuell benötigte Reinigung, Schmierung und/oder Reparatur der beschädigten und/oder verschmutzen Teile der Transportbahn, insbesondere einer Führungsschiene, eines Führungskanals oder einer Lauffläche, einleiten.

In einer speziellen Weiterbildung kann das Sonderelement ein erstes und ein zweites Teilelement umfassen,
wobei das erste mit dem zweiten Teilelement über eine Schleppvorrichtung verbunden ist,
wobei das erste Teilelement eine Messvorrichtung aufweist, und
wobei das Prüfen des Zustands der Transportbahn die Schritte umfasst:
aktives Bewegen des ersten Teilelements entlang der Transportbahn,
Schleppen des zweiten Teilelements mittels der Schleppvorrichtung und
Messen der Kraft auf die Schleppvorrichtung während des Schleppens mittels der Messvorrichtung.

Ein aktives Bewegen des ersten Teilelements entlang der Transportbahn geschieht hier, wie bereits oben beschrieben, durch Wechselwirkung eines Reaktionselements des ersten Teilelements mit Wechselwirkungselementen der Transportbahn und gesteuert durch die Steuer- und/oder Regeleinheit der Transporteinrichtung. Die Schleppvorrichtung kann wie oben durch eine Feder, eine Stange, ein Kabel oder ähnliches gegeben sein. Aufgrund der Reibung eines oder mehrerer Lagerelemente des zweiten Teilelements des Sonderelements mit einem oder mehreren komplementären Lagerelementen der Transportbahn, insbesondere einer Führungsschiene, erfährt das erste Teilelement über die Schleppvorrichtung eine Kraft, welche mittels der Messvorrichtung des ersten Teilelements des Sonderelements gemessen werden kann. Aus der gemessenen Kraft kann mittels einer Prozesseinheit des Sonderelements auf einen Reibungskoeffizienten des oder der Lagerelemente des zweiten Teilelements mit dem oder den komplementären Lagerelementen der Transportbahn geschlossen werden. Bei bekanntem Verschleißgrad des oder der Lagerelemente des zweiten Teilelements innerhalb vorgegebener Toleranzen kann somit mittels der gemessenen Kraft bzw. des daraus berechnenden Reibungskoeffizienten ein Verschleißgrad des oder der komplementären Lagerelemente der Transportbahn bestimmt werden. Überschreitet der bestimmte Verschleißgrad die gemessene Kraft oder der bestimmte Reibungskoeffizient einen vorgegebenen Schwellwert, so kann mittels der Steuer- und/oder Regeleinheit der Transporteinrichtung ein automatisches Reinigen, Schmieren und/oder Reparieren der entsprechenden Stelle, insbesondere der komplementären Lagerelemente, eingeleitet werden.

Gemäß einer weiteren, alternativen Weiterbildung kann das Sonderelement ein erstes und ein zweites Teilelement umfassen, wobei das Durchführen der Sonderfunktion ein Reinigen zumindest eines Teils der Transportbahn, insbesondere einer Führungsschiene der Transportbahn, an der vorgegebenen Stelle und/oder das Positionieren und/oder Anbringen eines Rüstteils und/oder Versorgungsteils zur Medienversorgung der Behälterbehandlungsanlage und/oder der Transporteinrichtung an einer Stelle der Behälterbehandlungsanlage und/oder der Transporteinrichtung umfasst, und wobei die Sonderfunktion durch relatives Bewegen des ersten und des zweiten Teilelements erfolgt. Auch hier sind dieselben Variationen und Weiterbildungen, die oben im Zusammenhang mit einer Reinigungsvorrichtung des Sonderelements bzw. einer Montagevorrichtung des Sonderelements beschrieben wurden, auf das erfindungsgemäße Verfahren anwendbar. Insbesondere kann das erfindungsgemäße Verfahren das relative Bewegen eines ersten und zweiten Teilelements, welche mittels einer Zahnstange verbunden sind, umfassen, wobei durch das relative Bewegen eine an dem zweiten Teilelement drehbar gelagerte Bürste mit einem in die Zahnstange eingreifenden Zahnrad in Rotation versetzt wird, wodurch der zumindest eine Teil der Transportbahn gereinigt werden kann. Des Weiteren kann das erfindungsgemäße Verfahren insbesondere das Platzieren einer CIP-Kappe durch relatives Bewegen des ersten und des zweiten Teilelements umfassen, wobei die an einem das erste und das zweite Teilelement verbindenden Gelenkarm angeordnete CIP-Kappe in der Höhe verstellt wird.

Durch regelmäßiges oder kontinuierliches Prüfen des Zustands der Transportbahn der Transporteinrichtung können Schadstellen und/oder Verschmutzungen insbesondere des Führungs- und Lagersystems der Transporteinrichtung frühzeitig erkannt und im Idealfall behoben werden, bevor es zu einer Störung kommt, durch welche wertvolle Produktionszeit verloren ginge. Mittels der oben beschriebenen Sonderelemente bzw. Sonderfunktionen kann sowohl die vorbeugende Wartung als auch die Reinigung, Schmierung und/oder Reparatur der Transportbahn automatisiert werden. Zudem kann mittels speziell dazu ausgebildeter Sonderelemente ein rascher Umbau der Behälterbehandlungsanlage bei einem Formatwechsel erfolgen. Dabei reduziert die Automatisierung der Wartung bzw. des Umbaus neben den Kosten des Betriebs der Behälterbehandlungsanlage auch das Risiko für das Bedienungspersonal.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen.
- Figur 1: stellt eine beispielhafte Ausführung zweier Transportelemente der Vielzahl von Transportelementen und der Wechselwirkungselemente der Transportbahn dar.
- Figur 2: stellt je eine beispielhafte Ausführung eines Sonderelements mit einer Prüfvorrichtung, einer Reinigungsvorrichtung und einer Schmiervorrichtung dar.
- Figur 3: stellt eine beispielhafte Ausführung je eines Sonderelements zum Positionieren einer CIP-Kappe an einem Füllventil und zum Transport einer Blasform für eine Streckblasvorrichtung gemäß der vorliegenden Erfindung dar.

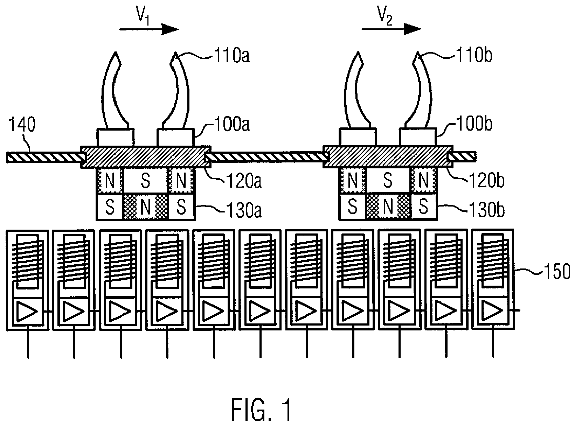

In Figur 1 sind exemplarisch zwei Transportelemente 100a und 100b aus der Vielzahl von Transportelementen dargestellt. Die vorliegenden Erfindung beschränkt sich jedoch nicht auf die hier dargestellte spezielle Ausführung der Transportelemente, sondern ist auf jede Art von Transportelementen anwendbar, solange diese einzeln steuerbar entlang einer Transportbahn geleitet werden können, insbesondere wenn dies mittels einer magnetischen Wechselwirkung mit der Transportbahn geschieht. Die hier dargestellten Transportelemente 100a und 100b können entlang der Transportbahn mittels einer Führungsschiene 140 geleitet werden. Dabei sind die Transportelemente in dieser speziellen Ausführung durch Gleitlager 120a und 120b an der Führungsschiene 140 gelagert. Die Figur 1 zeigt weiterhin zwei Greifelemente 110a und 110b, mittels derer die Transportelemente die Behälter aufnehmen können.

Der Antrieb der hier dargestellten passiven Transportelemente geschieht durch magnetische Wechselwirkung zwischen den Reaktionselementen 130a bzw. 130b der Transportelemente und einer Vielzahl elektrischer Wicklungen 150 entlang der Transportbahn. Dabei können die elektrischen Wicklungen 150 individuell angesteuert und als Elektromagnete einzeln umgepolt werden. Durch Wechselwirkung der Magnetfelder der Elektromagnete mit den hier dargestellten Permanentmagneten der Transportelemente erfahren die Transportelemente eine Kraftwirkung, welche bei geeigneter Steuerung der Elektromagnete 150 zu einer Beschleunigung, Abbremsung oder konstanten Bewegung der Transportelemente entlang der Führungsschiene 140 führt. Die hier dargestellten Reaktionselemente 130a und 130b der Transportelemente bestehen aus drei alternierend und senkrecht zur Führungsschiene angeordneten Permanentmagneten, wobei die Breite des mittleren Permanentmagneten in etwa dem Abstand zweier benachbarter elektrischer Wicklungen der Transportbahn entspricht und die Breite der äußeren Permanentmagneten etwa jeweils der Hälfte des Abstands der benachbarten elektrischen Wicklungen entspricht. Bei alternierender Polung benachbarter Elektromagnete der Transportbahn kann somit eine maximale Kraft auf das Reaktionselement entlang der Führungsschiene ausgeübt werden. Durch individuelles Ansteuern der Elektromagnete 150 können die Transportelemente 100a und 100b mit unterschiedlichen Geschwindigkeiten v₁ und v₂ entlang der Führungsschiene 140 bewegt werden. Bei den dargestellten senkrecht zur Führungsschiene angeordneten Magneten kann es sich jedoch auch um Elektromagnete handeln. Die zuvor beschriebenen Sonderelemente entsprechen insofern in ihrer Ausführung den hier dargestellten Transportelementen, dass sie über gleich gestaltete Reaktionselemente und Lagerelemente verfügen. Lediglich die Greifelemente 110a bzw. 110b fehlen bei den oben beschriebenen Sonderelementen und sind stattdessen durch die oben beschriebenen Vorrichtungen ersetzt. Zudem können spezielle Sonderelemente ein weiteres Teilelement aufweisen, welches über ein eigenes Reaktionselement verfügen kann, aber nicht muss (siehe Beispiele unten).

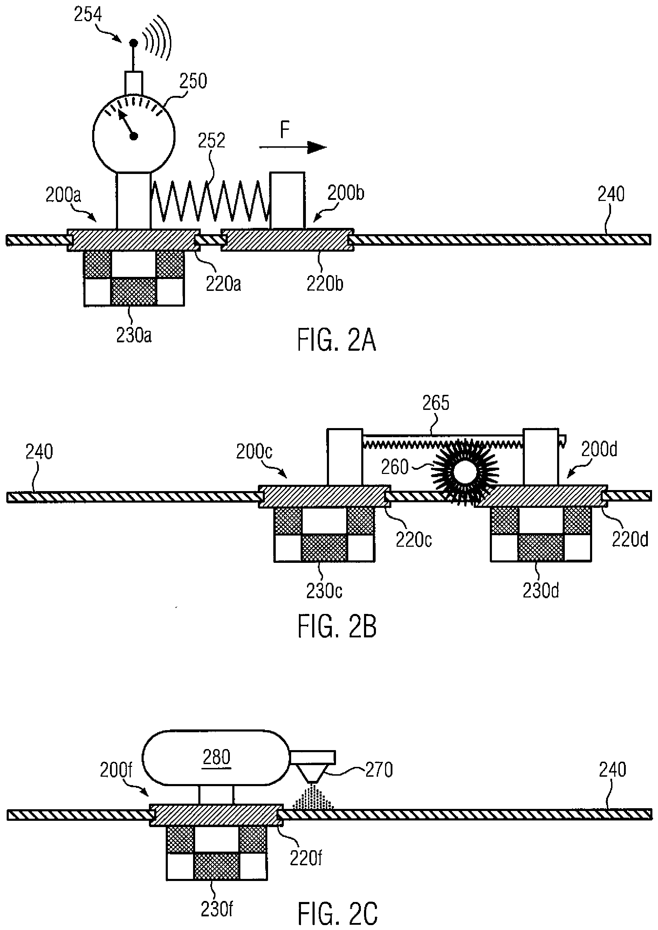

Figur 2 stellt je eine beispielhafte Ausführung eines Sonderelements mit einer Prüfvorrichtung, einer Reinigungsvorrichtung und einer Schmiervorrichtung dar.

Teilfigur 2A zeigt ein Sonderelement mit einer Prüfvorrichtung zum Bestimmen eines Reibungskoeffizienten eines Lagerelements des Sonderelements an der Transportbahn. Das dargestellte Sonderelement besteht aus einem ersten Teilelement 200a und einem zweiten Teilelement 200b, wobei das zweite Teilelement mit dem ersten Teilelement über eine hier beispielhaft als Feder ausgebildete Schleppvorrichtung 252 verbunden ist. Das erste und das zweite Teilelement des Sonderelements sind hier beispielhaft mit jeweils einem Gleitlager 220a bzw. 220b an einer Führungsschiene 240 der Transportbahn gelagert. Vorteilhafterweise sind die Lagerelemente 220a und 220b gleichartig ausgeführt. Während das erste Teilelement 200a über ein Reaktionselement 230a verfügt, welches durch, insbesondere magnetische, Wechselwirkung mit hier nicht dargestellten Wechselwirkungselementen der Transportbahn bewegt werden kann, wird das zweite Teilelement 200b mittels der Schleppvorrichtung 252 von dem ersten Teilelement entlang der Transportbahn gezogen. Dabei wird die dieser Bewegung entgegenwirkende Kraft F durch eine geeignete Messvorrichtung 250 des ersten Teilelements gemessen und anschließend mittels der Sendeeinheit 254 des ersten Teilelements an die Steuer- und/oder Regeleinheit der Transporteinrichtung übertragen. Alternativ hierzu kann mittels einer hier nicht dargestellten Prozesseinheit des Sonderelements ein Reibungskoeffizient für das Gleitlager 220b an der Führungsschiene 240 aus der gemessen Kraft F ermittelt werden, welcher anschließend über die Sendeeinheit 254 an die Steuer- und/oder Regeleinheit übermittelt wird. Bei bekanntem Zustand des Gleitlagers 220b lässt sich somit über die gemessene Kraft F auf einen Zustand der Führungsschiene bezüglich der Reibung schließen und bei kontinuierlicher Überwachung rechtzeitig eine entsprechende Wartung bzw. Schmierung der Führungsschiene einleiten.

Teilfigur 2B zeigt exemplarisch ein Sonderelement mit einer Reinigungsvorrichtung in Form einer Bürste 260. Auch hier besteht das Sonderelement aus einem ersten Teilelement 200c und einem zweiten Teilelement 200d, welche in diesem Fall über eine Zahnstange 265 so miteinander verbunden sind, dass sich das zweite Teilelement 200d relativ zu dem ersten Teilelement 200c bewegen kann. In der hier dargestellten beispielhaften Ausführung sind beide Teilelemente mit je einem Reaktionselement 230c bzw. 230d aktiv in Wechselwirkung mit den Wechselwirkungselementen der Transportbahn entlang einer Führungsschiene 240 bewegbar. Auch in diesem nicht limitierenden Beispiel sind die Teilelemente mittels Gleitlager 220c bzw. 220d an der Führungsschiene 240 gelagert. Eine oder mehrere Bürsten zum Reinigen der Transportbahn, insbesondere der Führungsschiene 240, sind drehbar an dem zweiten Teilelement 200d gelagert, wobei ein mit der oder den Bürsten verbundenes Zahnrad zur Erzeugung einer Rotation der Bürsten in die Zähne der Zahnstange 265 so eingreift, dass durch Bewegen des zweiten Teilelements relativ zu dem ersten Teilelement eine Rotation der Bürsten 260 entsteht, wodurch die Transportbahn bzw. Führungsschiene gereinigt wird. Das relative Bewegen der beiden Teilelemente kann hierbei automatisch und kontinuierlich oszillierend erfolgen oder mittels der Steuer- und/oder Regeleinheit der Transporteinrichtung gesteuert werden.

Teilfigur 2C schließlich zeigt ein Sonderelement mit einer Schmiervorrichtung zum Beaufschlagen einer Führungsschiene 240 mit einem Schmiermittel. Auch hier ist das Sonderelement 200f mittels eines Gleitlagers 220f und eines Reaktionselements 230f individuell steuerbar an der Führungsschiene 240 gelagert. Von der Steuer- und/oder Regeleinheit der Transporteinrichtung oder einer an dem Sonderelement angeordneten, hier nicht dargestellten, Steuer- und/oder Regeleinheit kann mittels einer Düse 270 Schmiermittel aus einem Vorratsbehälter 280 auf die Führungsschiene 240 aufgesprüht werden. Eine solche Schmierung kann in regelmäßigen Zeitabständen und/oder nach Bedarf, insbesondere bei Messung eines erhöhten Reibungskoeffizienten des in Teilfigur 2A dargestellten Sonderelements, von der Steuer- und/oder Regeleinheit gesteuert erfolgen. Der Vorratsbehälter 280 für das Schmiermittel kann als Einheit von dem Bedienpersonal ausgetauscht oder bei Bedarf automatisch mittels einer Befüllvorrichtung entlang der Transportbahn aufgefüllt werden.

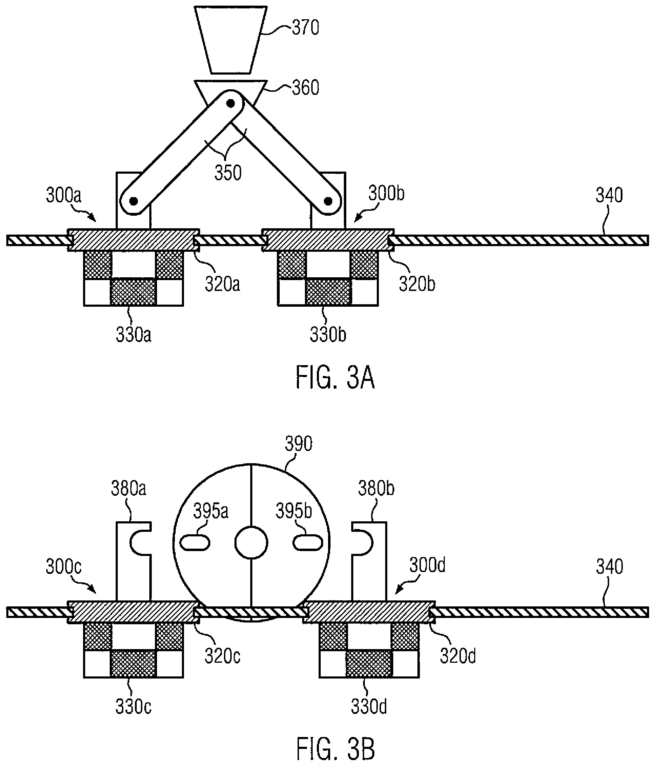

Figur 3 stellt je eine exemplarische Ausführung eines Sonderelements zum Positionieren einer CIP-Kappe an einem Füllventil und zum Transport einer Blasform für eine Streckblasvorrichtung dar. Erneut umfasst das in Teilfigur 3A dargestellte Sonderelement zwei Teilelemente 300a und 300b, welche mittels je eines Gleitlagers 320a bzw. 320b an einer Führungsschiene 340 der Transportbahn gelagert sind und mit Hilfe ihrer Reaktionselemente 330a und 330b individuell gesteuert entlang der Transportbahn bewegt werden können. Dabei sind die hier dargestellten Teilelemente über eine Gelenkstange 350 miteinander verbunden, an welcher eine CIP-Kappe 360 so angeordnet ist, dass sie durch Annähern der beiden Teilelemente angehoben und auf einem hier exemplarisch dargestellten Füllventil 370 einer Füllvorrichtung der Behälterbehandlungsanlage platziert werden kann. Nach Platzieren der CIP-Kappe kann dann automatisch eine Reinigung des Füllventils 370 erfolgen. Hierbei wird die Bewegung des Sonderelements zu der entsprechenden Füllvorrichtung sowie die relative Bewegung der beiden Teilelemente zum Positionieren der CIP-Kappe durch die Steuer- und/oder Regeleinheit der Transporteinrichtung gesteuert.

Teilfigur 3B schließlich zeigt zwei spiegelsymmetrisch angeordnete Sonderelemente 300c und 300d, welche mittels eines exemplarisch dargestellten Gleitlagers 320c bzw. 320d an der Führungsschiene 340 der Transportbahn angeordnet sind und mit Hilfe ihrer Reaktionselemente 330c und 330d entlang der Transportbahn bewegt werden können. Dabei weisen die beiden Sonderelemente je eine Klammer 380a bzw. 380b mit einer Aussparung auf, welche einen Haltegriff 395a bzw. 395b einer Blasform 390 durch relatives Bewegen der beiden Sonderelemente aufnehmen können. Nach Aufnahme der Blasform durch die beiden Sonderelemente können beiden Sonderelemente gemeinsam von der Steuer- und/oder Regeleinheit der Transporteinrichtung gesteuert entlang der Transportbahn bewegt werden, so dass die Blasform zu einer Streckblasvorrichtung der Behälterbehandlungsanlage transportiert werden kann. Dort kann die Blasform z.B. mittels eines Montagearms der Streckblasvorrichtung automatisch montiert werden.

Mit Hilfe der in den Teilfiguren 3A und 3B dargestellten Sonderelemente zum Durchführen einer Sonderfunktion wird somit das automatische Reinigen der Füllventile einer Füllvorrichtung bzw. der automatische Austausch von Blasformen einer Streckblasvorrichtung der Behälterbehandlungsanlage ermöglicht. Hierdurch werden, wie auch bei den in Figur 2 gezeigten Sonderelementen zum Prüfen, Reinigen bzw. Schmieren der Transportbahn, Stillstandszeiten der Behälterbehandlungsanlage vermieden und Gefahren für das Bedienpersonal beim Handling der Behälterbehandlungsanlage reduziert.

## Patentansprüche

1. Transporteinrichtung zum Transport von Behältern in einer Behälterbehandlungsanlage mit
einer Transportbahn,
einer Vielzahl von Transportelementen (100a, 100b) zum Transportieren eines oder mehrerer Behälter, wobei die Vielzahl der Transportelemente bewegbar an der Transportbahn angeordnet sind,
mindestens einem Sonderelement (200a-d, 200f, 300a-d), das an der Transportbahn bewegbar angeordnet und verschieden von der Vielzahl der Transportelemente ist, und
einer Steuer- und/oder Regeleinheit,
wobei die Transportbahn, die Vielzahl der Transportelemente und das Sonderelement derart ausgestaltet sind, dass die Vielzahl der Transportelemente und das Sonderelement mittels der Steuer- und/oder Regeleinheit einzeln steuerbar entlang der Transportbahn geführt werden können, und
wobei die Vielzahl der Transportelemente (100a, 100b), das Sonderelement (200a-d, 200f, 300a-d) und zumindest ein Abschnitt der Transportbahn derart ausgebildet sind, dass die Vielzahl der Transportelemente und das Sonderelement im Bereich des Abschnitts der Transportbahn mittels einer magnetischen Kraft, vorzugsweise in Wechselwirkung mit der Transportbahn, bewegt werden können;
**dadurch gekennzeichnet, dass**
das Sonderelement (300a-d) eine Vorrichtung zum Transport von Rüstteilen (390) aufweist.

2. Transporteinrichtung nach Anspruch 1, wobei die Vielzahl der Transportelemente (100a, 100b) und das Sonderelement (200a-d, 200f, 300a-d) vollständig magnetisch oder teilweise magnetisch und teilweise mechanisch oder vollständig mechanisch an der Transportbahn gelagert sind.

3. Transporteinrichtung nach Anspruch 1 oder 2, weiterhin mindestens ein weiteres Sonderelement (200a, 200b) umfassend, das eine Prüfvorrichtung aufweist, welche dazu ausgebildet ist, einen Zustand der Transportbahn an einer vorgegebenen Stelle der Transportbahn zu bestimmen.

4. Transporteinrichtung nach Anspruch 3,
wobei das weitere Sonderelement (200a, 200b) weiterhin eine Sendeeinheit (254) aufweist,
wobei die Steuer- und/oder Regeleinheit eine Empfangseinheit aufweist, und
wobei die Prüfvorrichtung weiterhin dazu ausgebildet ist, ein den bestimmten Zustand beschreibendes Signal, insbesondere in Form eines Zustandsparameters der Transportbahn, an die Steuer- und/oder Regeleinheit zu senden.

5. Transporteinrichtung nach Anspruch 3 oder 4,
wobei die Vielzahl der Transportelemente (100a, 100b) und das weitere Sonderelement (200a, 200b) zumindest teilweise mechanisch an der Transportbahn gelagert sind, und
wobei die Prüfvorrichtung dazu ausgebildet ist, einen Reibungskoeffizienten mindestens eines Lagerelements (220a, 220b) des weiteren Sonderelements an der Transportbahn zu bestimmen.

6. Transporteinrichtung nach Anspruch 1 oder 2, weiterhin mindestens ein weiteres Sonderelement (200c, 200d) umfassend, das eine Reinigungsvorrichtung aufweist, welche dazu ausgebildet ist, zumindest einen Teil der Transportbahn, insbesondere eine Führungsschiene (240) der Transportbahn, an einer vorgegebenen Stelle der Transportbahn zu reinigen.

7. Transporteinrichtung nach Anspruch 1 oder 2, weiterhin mindestens ein weiteresSonderelement (200f) umfassend, das eine Schmiervorrichtung aufweist, welche dazu ausgebildet ist, zumindest einen Teil der Transportbahn, an welchem die Vielzahl der Transportelemente und die Sonderelemente gelagert sind, insbesondere eine Führungsschiene (240) der Transportbahn, an einer vorgegebenen Stelle der Transportbahn mit einem Schmiermittel zu beaufschlagen.

8. Transporteinrichtung nach Anspruch 7, wobei das weitere Sonderelement (200f) weiterhin einen Vorratsbehälter (280) für das Schmiermittel aufweist.

9. Transporteinrichtung nach Anspruch 1 oder 2,
wobei das Sonderelement (300a-d) weiterhin eine Vorrichtung zum Transport von Versorgungsteilen zur Medienversorgung der Behälterbehandlungsanlage und/oder der Transporteinrichtung aufweist.

10. Transporteinrichtung nach Anspruch 1 oder 9,
wobei das Sonderelement weiterhin eine Montagevorrichtung aufweist, welche dazu ausgebildet ist, ein mitgeführtes Rüstteil (390) und/oder Versorgungsteil an einer Stelle der Behälterbehandlungsanlage und/oder der Transporteinrichtung zu positionieren und/oder anzubringen.

11. Verfahren zum Durchführen einer Sonderfunktion einer Transporteinrichtung, welche eine Vielzahl von einzeln steuerbaren Transportelementen (100a, 100b) zum Transport von Behältern in einer Behälterbehandlungsanlage entlang einer Transportbahn umfasst, mittels eines Sonderelements (200a-d, 200f, 300a-d), das von der Vielzahl der Transportelemente verschieden ist, wobei die Vielzahl der Transportelemente und das Sonderelement bewegbar an der Transportbahn angeordnet sind, die Schritte umfassend:
Bewegen des Sonderelements zu einer vorgegebenen Stelle der Transportbahn und
Durchführen der Sonderfunktion an der vorgegebenen Stelle mittels des Sonderelements,
wobei die Sonderfunktion verschieden vom Transportieren von Behältern ist,
wobei das Bewegen durch eine Steuer- und/oder Regeleinheit der Transporteinrichtung gesteuert wird,
wobei die Vielzahl der Transportelemente und das Sonderelement im Bereich zumindest eines Abschnitts der Transportbahn mittels einer magnetischen Kraft, vorzugsweise in Wechselwirkung mit der Transportbahn, bewegt werden, und
wobei das Durchführen der Sonderfunktion ein Positionieren und/oder Anbringen eines Rüstteils (390) an einer Stelle der Behälterbehandlungsanlage und/oder der Transporteinrichtung umfasst.

12. Verfahren nach Anspruch 11, wobei das Durchführen der Sonderfunktion weiterhin ein Prüfen des Zustands der Transportbahn an der vorgegebenen Stelle umfasst.

13. Verfahren nach Anspruch 12,
wobei das Sonderelement ein erstes und ein zweites Teilelement (200a, 200b) umfasst,
wobei das erste mit dem zweiten Teilelement über eine Schleppvorrichtung (252) verbunden ist,
wobei das erste Teilelement (200a) eine Messvorrichtung (250) aufweist, und
wobei das Prüfen des Zustands der Transportbahn die Schritte umfasst:
aktives Bewegen des ersten Teilelements (200a) entlang der Transportbahn,
Schleppen des zweiten Teilelements (200b) mittels der Schleppvorrichtung (252) und
Messen der Kraft auf die Schleppvorrichtung (252) während des Schleppens mittels der Messvorrichtung (250).

14. Verfahren nach Anspruch 11,
wobei das Sonderelement ein erstes und ein zweites Teilelement (230c, 230d; 300a, 300b; 300c, 300d) umfasst, und
wobei die Sonderfunktion durch relatives Bewegen des ersten (230c; 300a; 300c) und des zweiten Teilelements (230d; 300b; 300d) erfolgt.

15. Verfahren nach Anspruch 14,
wobei das Durchführen der Sonderfunktion weiterhin ein Reinigen zumindest eines Teils der Transportbahn, insbesondere einer Führungsschiene (240) der Transportbahn, an der vorgegebenen Stelle und/oder das Positionieren und/oder Anbringen eines Versorgungsteils zur Medienversorgung der Behälterbehandlungsanlage und/oder der Transporteinrichtung an einer Stelle der Behälterbehandlungsanlage und/oder der Transporteinrichtung umfasst.

## Claims

1. Transport apparatus for transporting containers in a container processing installation comprising
a transport track,
a plurality of transport elements (100a, 100b) for transporting one or more containers, where said plurality of transport elements is movably arranged on said transport track,
at least one special element (200a-d, 200f, 300a-d) which is movably arranged on said transport track and is different from said plurality of transport elements, and
an open-loop and/or closed-loop control unit,
where said transport track, said plurality of transport elements, and said special element are designed in such a way that said plurality of transport elements and said special element can be guided along said transport track in such a way that said plurality of transport elements and said special element are individually controllable by means of said open-loop and/or closed-loop control unit, and
where said plurality of transport elements (100a, 100b), said special element (200a-d, 200f, 300a-d) and at least a section of said transport track are formed such that said plurality of transport elements and said special element can in the area of said section of said transport track be moved by way of magnetic force, preferably in interaction with said transport track;
**characterized in that**
said special element (300a-d) comprises a device for transporting tooling parts (390).

2. Transport apparatus according to claim 1, where said plurality of transport elements (100a, 100b) and said special element (200a-d, 200f, 300a-d) are supported fully magnetically or in part magnetically and in part mechanically or fully mechanically on said transport track.

3. Transport apparatus according to claim 1 or 2, further comprising at least one further special element (200a, 200b) which comprises an inspection device being adapted to determine a condition of said transport track at a predetermined location of said transport track.

4. Transport apparatus according to claim 3,
where said further special element (200a, 200b) further comprises a transmitter unit (254),
where said open-loop and/or closed-loop control unit comprises a receiver unit, and
where said inspection device is further configured to transmit a signal describing the condition determined, in particular in the form of a condition parameter of said transport track, to said open-loop and/or closed-loop control unit.

5. Transport apparatus according to claim 3 or 4,
where said plurality of transport elements (100a, 100b) and said further special element (200a, 200b) are at least in part mechanically supported on said transport track, and
where said inspection device is adapted to determine a friction coefficient of at least one bearing element (220a, 220b) of said further special element on said transport track.

6. Transport apparatus according to claim 1 or 2, further comprising at least one further special element (200c, 200d) which comprises a cleaning device which is configured to clean at least a portion of said transport track, in particular a guide rail (240) of said transport track, at a predetermined location of said transport track.

7. Transport apparatus according to claim 1 or 2, further comprising at least one further special element (200f) which comprises a lubricating device which is configured to apply lubricant at least to a portion of said transport track on which said plurality of transport elements and said special elements are supported, in particular a guide rail (240) of said transport track, at a predetermined location of the transport track.

8. Transport apparatus according to claim 7, where said further special element (200f) further comprises a reservoir (280) for said lubricant.

9. Transport apparatus according to claim 1 or 2,
where said special element (300a-d) further comprises a device for transporting supply parts for supplying media to said container processing installation and/or said transport apparatus.

10. Transport apparatus according to claim 1 or 9,
where said special element further comprises a mounting device which is adapted to position and/or attach a tooling part (390) and/or supply part carried along at a location of said container processing installation and/or said transport apparatus.

11. Method for performing a special function of a transport apparatus, comprising a plurality of individually controllable transport elements (100a, 100b) for transporting containers in a container processing installation along a transport track, by way of a special element (200a-d, 200f, 300a-d) which is different from said plurality of transport elements, where said plurality of transport elements and said special element are movably disposed on said transport track, said method comprising the steps of:
moving said special element to a predetermined location of said transport track, and
performing said special function at the predetermined location by use of said special element,
where said special function is different from transporting containers,
where moving is controlled by an open-loop and/or closed-loop control unit of said transport apparatus,
where said plurality of transport elements and said special element are moved in the area of at least a section of said transport track by way of magnetic force, preferably in interaction with said transport track, and
where performing said special function comprises positioning and/or attaching a tooling part (390) at a location of said container processing installation and/or said transport apparatus

12. Method according to claim 11, where performing said special function further comprises inspecting the condition of said transport track at a predetermined location.

13. Method according to claim 12,
where said special element comprises a first and a second partial element (200a, 200b),
where said first partial element is connected to said second one via a drag device (252),
where said first partial element (200a) comprises a measuring device (250), and
where inspecting the condition of said transport track comprises the steps of:
actively moving said first partial element (200a) along said transport track,
dragging said second partial element (200b) by use of said drag device (252), and
measuring the force upon said drag device (252) during the dragging process by use of said measuring device (250).

14. Method according to claim 11,
where said special element comprises a first and a second partial element (230c, 230d; 300a, 300b; 300c, 300d), and
where said special function is effected by a relative motion of said first (230c; 300a; 300c) and said second partial element (230d; 300b; 300d).

15. Method according to claim 14,
where performing said special function further comprises cleaning at least a portion of said transport track, in particular a guide rail (240) of said transport track, at said predetermined location and/or positioning and/or attaching a supply part for supplying media to said container processing installation and/or said transport apparatus at a location of said container processing installation and/or said transport apparatus.

## Revendications

1. Dispositif de transport pour le transport de contenants dans une installation de traitement de contenants, comprenant
une voie de transport,
un grand nombre d'éléments de transport (100a, 100b) pour transporter un ou plusieurs contenants, ledit grand nombre d'éléments de transport étant agencés de manière déplaçable au niveau de la voie de transport,
au moins un élément spécial (200a-d, 200f, 300a-d), qui est agencé de manière déplaçable au niveau de la voie de transport et est différent dudit grand nombre des éléments de transport, et
une unité de commande et/ou de régulation,
la voie de transport, le grand nombre d'éléments de transport et l'élément spécial étant configurés de manière telle, que le grand nombre d'éléments de transport et l'élément spécial puissent être guidés le long de la voie de transport en étant commandés individuellement au moyen de l'unité de commande et/ou de régulation, et
le grand nombre d'éléments de transport (100a, 100b), l'élément spécial (200a-d, 200f, 300a-d) et au moins un tronçon de la voie de transport sont configurés de manière telle, que le grand nombre d'éléments de transport et l'élément spécial puissent être déplacés dans la zone du tronçon de la voie de transport au moyen d'une force magnétique, de préférence par interaction avec la voie de transport ;
**caractérisé en ce que**
l'élément spécial (300a-d) comporte un dispositif pour le transport de pièces d'équipement (390).

2. Dispositif de transport selon la revendication 1,
dans lequel ledit grand nombre d'éléments de transport (100a, 100b) et l'élément spécial (200a-d, 200f, 300a-d) sont montés sur la voie de transport de manière totalement magnétique, ou bien partiellement magnétique et partiellement mécanique, ou bien de manière totalement mécanique.

3. Dispositif de transport selon la revendication 1 ou la revendication 2, comprenant, par ailleurs, au moins un autre élément spécial (200a, 200b), qui comporte un dispositif de vérification, qui est configuré pour déterminer un état de la voie de transport à un endroit prédéterminé de la voie de transport.

4. Dispositif de transport selon la revendication 3,
dans lequel ledit autre élément spécial (200a, 200b) comporte par ailleurs une unité d'émission (254),
dans lequel l'unité de commande et/ou de régulation comporte une unité de réception, et
dans lequel le dispositif de vérification est par ailleurs configuré pour envoyer à l'unité de commande et/ou de régulation, un signal décrivant ledit état déterminé, notamment sous la forme d'un paramètre d'état de la voie de transport.

5. Dispositif de transport selon la revendication 3 ou la revendication 4,
dans lequel ledit grand nombre d'éléments de transport (100a, 100b) et ledit autre élément spécial (200a, 200b) sont montés au moins en partie de manière mécanique sur la voie de transport, et
dans lequel le dispositif de vérification est configuré pour déterminer un coefficient de frottement d'au moins un élément de palier (220a, 220b) dudit autre élément spécial sur la voie de transport.

6. Dispositif de transport selon la revendication 1 ou la revendication 2, comprenant, en outre, au moins un autre élément spécial (200c, 200d), qui comporte un dispositif de nettoyage configuré pour nettoyer au moins une partie de la voie de transport, notamment une glissière de guidage (240) de la voie de transport, en un endroit prédéterminé de la voie de transport.

7. Dispositif de transport selon la revendication 1 ou la revendication 2, comprenant, par ailleurs, au moins un autre élément spécial (200f) comportant un dispositif de graissage, qui est configuré pour alimenter en agent de graissage, au moins une partie de la voie de transport sur laquelle sont montés ledit grand nombre d'éléments de transport et les éléments spéciaux, notamment une glissière de guidage (240) de la voie de transport, en un endroit prédéterminé de la voie de transport.

8. Dispositif de transport selon la revendication 7,
dans lequel ledit autre élément spécial (200f) comporte par ailleurs, un réservoir (280) pour l'agent de graissage.

9. Dispositif de transport selon la revendication 1 ou la revendication 2,
dans lequel l'élément spécial (300a-d) comporte par ailleurs, un dispositif pour le transport de pièces d'alimentation pour l'alimentation en fluides de l'installation de traitement de contenants et/ou du dispositif de transport.

10. Dispositif de transport selon la revendication 1 ou la revendication 9,
dans lequel l'élément spécial comporte par ailleurs, un dispositif de montage, qui est configuré pour positionner et/ou mettre en place en un endroit de l'installation de traitement de contenants et/ou du dispositif de transport, une pièce d'équipement (390) et/ou une pièce d'alimentation ayant été acheminée avec l'élément spécial.

11. Procédé pour exécuter une fonction spéciale d'un dispositif de transport, qui comprend un grand nombre d'éléments de transport (100a, 100b) pouvant être commandés individuellement et destinés à transporter des contenants dans une installation de traitement de contenants, le long d'une voie de transport, au moyen d'un élément spécial (200a-d, 200f, 300a-d), qui est différent dudit grand nombre d'éléments de transport, ledit grand nombre d'éléments de transport et l'élément spécial étant agencés de manière déplaçable au niveau de la voie de transport, le procédé comprenant les étapes suivantes :
le déplacement de l'élément spécial à un endroit prédéterminé de la voie de transport, et
l'exécution de la fonction spéciale à l'endroit prédéterminé, au moyen de l'élément spécial,
procédé
d'après lequel la fonction spéciale est différente du transport de contenants,
d'après lequel le déplacement est commandé par une unité de commande et/ou de régulation du dispositif de transport,
d'après lequel ledit grand nombre d'éléments de transport et l'élément spécial sont déplacés dans la zone d'au moins un tronçon de la voie de transport, au moyen d'une force magnétique, de préférence en interaction avec la voie de transport, et
d'après lequel l'exécution de la fonction spéciale comprend un positionnement et/ou la mise en place d'une pièce d'équipement (390) à un endroit de l'installation de traitement de contenants et/ou du dispositif de transport.

12. Procédé selon la revendication 11,
d'après lequel l'exécution de la fonction spéciale comprend, par ailleurs, une vérification de l'état de la voie de transport à l'endroit prédéterminé.

13. Procédé selon la revendication 12,
d'après lequel l'élément spécial comprend un premier et un deuxième élément partiel (200a, 200b),
d'après lequel le premier élément partiel est relié au deuxième élément partiel par l'intermédiaire d'un dispositif de remorquage (252),
d'après lequel le premier élément partiel (200a) comporte un dispositif de mesure (250), et
d'après lequel la vérification de l'état de la voie de transport comprend les étapes suivantes :
le déplacement actif du premier élément partiel (200a) le long de la voie de transport,
le remorquage du deuxième élément partiel (200b) au moyen du dispositif de remorquage (252), et
la mesure de la force exercée sur le dispositif de remorquage (252) pendant le remorquage, au moyen du dispositif de mesure (250).

14. Procédé selon la revendication 11,
d'après lequel l'élément spécial comprend un premier et un deuxième élément partiel (230c, 230d; 300a, 300b; 300c, 300d), et
d'après lequel la fonction spéciale est effectuée par déplacement relatif du premier (230c; 300a; 300c) et du deuxième élément partiel (230d; 300b; 300d).

15. Procédé selon la revendication 14,
d'après lequel l'exécution de la fonction spéciale comprend, par ailleurs, un nettoyage d'au moins une partie de la voie de transport, notamment d'une glissière de guidage (240) de la voie de transport, au niveau dudit endroit prédéterminé, et/ou le positionnement et/ou la mise en place d'une pièce d'alimentation pour l'alimentation en fluides de l'installation de traitement de contenants et/ou du dispositif de transport à un endroit donné de l'installation de traitement de contenants et/ou du dispositif de transport.
